(19)

Europäisches Patentamt
European Patent Office
Office européen des brevets

(11)  **EP 4 174 739 A1**

(12)  **EUROPEAN PATENT APPLICATION**

(43) Date of publication:
**03.05.2023  Bulletin 2023/18**

(21) Application number: **21205556.0**

(22) Date of filing: **29.10.2021**

(51) International Patent Classification (IPC):
**G06N 20/20** (2019.01)          **G06N 3/04** (2023.01)
**G06N 3/08** (2023.01)

(52) Cooperative Patent Classification (CPC):
**G06N 20/20;** G06N 3/045; G06N 3/048;
G06N 3/084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panakeia Technologies Limited
Cambridge CB1 2LA (GB)**

(72) Inventors:
• **Raharja, Muhammad Pandu
Cambridge, CB1 2LA (GB)**
• **Li, Xiusi
Cambridge, CB1 2LA (GB)**

(74) Representative: **Marks & Clerk LLP
15 Fetter Lane
London EC4A 1BW (GB)**

(54)  **A METHOD OF CLASSIFICATION**

(57)  A computer implemented method, comprising:
obtaining a first dataset comprising first input data corresponding to a first class;
obtaining a second dataset comprising second input data corresponding to the first class;
training at least one classifier using the first dataset;
inputting the second input data from the second dataset to the at least one classifier, and providing a classification model comprising a first classification and a second classification, wherein the first classification predicts a greater proportion of the second input data corresponding to the first class to be in the first class than the second classification.

Figure 5

**Description**

FIELD

The present disclosure relates to a method of classification, a system for classification, and a method of training.

BACKGROUND

Classifier models have application in a wide range of fields. For example, classifier models can be used in various medical applications. A classifier model can be used to provide a medical diagnosis, by taking as input physiological measurements for example. In another example, a classifier model can be used to analyse medical image data, for example to predict whether an input tissue image contains cancerous cells or to predict whether a specific biomarker is associated with a tissue image.

Such classifier models may be trained using a training dataset. For example, a training dataset may comprise a large number of example inputs, together with labelled classification predictions. A classification method using a classifier model which has been modelled on a training dataset will have some level of inaccuracy when deployed on new input data however. The accuracy of a classification method can be measured by the number of correct predictions as a proportion of the number of total predictions made by the method. This can be assessed on a test dataset for example, where the correct prediction is known for each input in the dataset.

In some use cases, for example medical use cases, a high accuracy is needed. Accuracy of the classification method can be improved by improving the classifier model performance. Such improvement might be achieved by further training of the classifier model on a new training dataset for example. However, in some cases, further improvement to the classifier model performance is not possible, for example where further training data cannot be easily obtained.

BRIEF DESCRIPTION OF THE FIGURES

Systems and methods in accordance with non-limiting embodiments will now be described with reference to the accompanying figures in which:

Figure 1 shows a schematic illustration of a method of classification according to an embodiment;

Figure 2(a) is a schematic illustration of a classifier model output for a dataset;

Figure 2(b) shows a schematic illustration of method according to a first example;

Figure 3 shows a schematic illustration of method according to a first example;

Figure 4 shows an example of a convolutional neural network;

Figure 5 is a schematic illustration showing a training pipeline and deployment of a trained classification system according to the first example;

Figure 6 is a schematic illustration showing a first predictive threshold;

Figure 7 is a schematic illustration showing a second predictive threshold;

Figure 8(a) is a schematic illustration of a method of training a system for classification in accordance with a first example;

Figure 8(b) is a schematic illustration of a method of training a system for classification in accordance with the first example;

Figure 9 shows a schematic illustration of a transition from perfect sensitivity to perfect specificity;

Figure 10(a) is a schematic illustration of a method of training a system for classification according to a modification of the first example;

Figure 10(b) shows an example optimisation process;

Figure 10(c) shows accuracy values calculated for threshold combinations;

Figure 11(a) shows a method of classification according to a second example;

Figure 11(b) shows a schematic illustration of the method including the input data;

Figure 12(a) is a schematic illustration of a method of training a classification system in accordance with the second example;

Figure 12(b) is a schematic illustration showing a training pipeline, and deployment of the trained classification system, in accordance with a second example;

Figure 12(c) is a schematic illustration of a method of training a classifier according to a modification of the second example;

Figure 13 is a schematic illustration of a method of classification according to a third example;

Figure 14 is a schematic illustration of an example method of classification;

Figure 15 shows a schematic illustration of an example classification system;

Figure 16 shows a method of classification according to a fourth example.

DETAILED DESCRIPTION

According to a first aspect, there is provided a computer implemented method, comprising:

obtaining a first dataset comprising first input data corresponding to a first class;
obtaining a second dataset comprising second input data corresponding to the first class;
training at least one classifier using the first dataset;
inputting the second input data from the second dataset to the at least one classifier, and providing a classification model comprising a first classification and a second classification, wherein the first classification predicts a greater proportion of the second input data corresponding to the first class to be in the first class than the second classification.

In an example, the second classification predicts a greater proportion of the second input data corresponding to a second class to be in the second class than the first classification.
In an example, the first class is the negative class and the second class is the positive class.
In an example, the first classification comprises applying a first classifier and using a first predictive threshold and the second classification comprises applying the first classifier and using a second predictive threshold. The first predictive threshold is higher than the second predictive threshold.
In an example, the first classifier is a binary classifier. Determining the first predictive threshold may comprise determining the highest output value of the binary classifier for an input from the second data set corresponding to the first class and setting the first predictive threshold to less than or equal to the highest output value, and wherein determining the second predictive threshold comprises determining the lowest output value for an input from the second data set corresponding to a second class and setting the second predictive threshold to greater than or equal to the lowest output value.
In an example, the at least one classifier comprises at least two classifiers, and providing the classification model comprises determining a first classifier of the at least two classifiers, wherein the first classifier predicts a greatest proportion of the second input data corresponding to the first class to be in the first class of the at least two classifiers, and determining a second classifier of the at least two classifiers, wherein the second classifier predicts a greatest proportion of the second input data corresponding to a second class to be in the second class of the at least two classifiers.
In an example, providing the classification model comprises determining a first predictive threshold and a second predictive threshold, wherein determining the first predictive threshold and the second predictive threshold comprises obtaining a plurality of possible combinations of values for the first predictive threshold and values for the second predictive threshold, determining an accuracy of a classification model using each of the possible combinations, and selecting a combination having an accuracy higher than a pre-determined accuracy value.
In an example, the first dataset comprises classification labels for the first input data and the second dataset comprises classification labels for the second input data.

In an example, the first classifier and the second classifier correspond to different model architectures and/or correspond to parameters updated based on different input data and/or using different hyper-parameters.

In an example, the first dataset comprises first input data corresponding to a first population and the second data set comprises second input data corresponding to a second population.

According to another aspect, there is provided a computer implemented method, comprising:

> obtaining a first dataset comprising first input data corresponding to a first class;
> obtaining a second dataset comprising second input data corresponding to the first class;
> training a classifier using the first dataset;
> inputting the second input data from the second dataset to the classifier, and providing a classification model comprising a first classification, wherein providing the classification model comprising the first classification comprises determining a predictive threshold corresponding to the first class.

In an example, determining the predictive threshold comprises determining the highest output value of the classifier for an input from the second data set corresponding to the first class and setting the predictive threshold to less than or equal to the highest output value.

In an example, determining the predictive threshold comprises determining the lowest output value for an input from the second data set corresponding to the first class and setting the predictive threshold to greater than or equal to the lowest output value.

In an example, determining the predictive threshold comprises obtaining a plurality of possible values for the predictive threshold, determining score for a classification model using each of the possible values, and selecting a value having score higher than a pre-determined score. The score may be a measure of the proportion of data which does not correspond to the first class which is classified as being in the first class. The plurality of possible values may comprise a set of values between the highest output value of the classifier for an input from the second data set corresponding to the first class and the lowest output value of the classifier for an input from the second data set corresponding to the first class.

According to another aspect, there is provided a computer implemented method, comprising:

> obtaining input data;
> inputting the input data to a classification model, the classification model applying a first classification and a second classification, wherein the first classification is configured to predict a greater proportion of input data corresponding to a first class correctly than the second classification;
> determining a classification prediction for the input data based on the output of the first classification and the second classification.

According to another aspect, there is provided a computer implemented method, comprising:

> obtaining input data;
> inputting the input data to a classification model, the classification model applying a first classification and a second classification, wherein the first classification uses a first predictive threshold and the second classification uses a second predictive threshold, wherein the first predictive threshold is higher than the second predictive threshold;
> determining a classification prediction for the input data based on the output of the first classification and the second classification.

In an example, the first classification comprises applying a first classifier and using a first predictive threshold and the second classification comprises applying the first classifier and using a second predictive threshold, wherein the first predictive threshold is higher than the second predictive threshold.

In an example, the first classification comprises applying a first classifier and the second classification comprises applying a second classifier.

In an example, the input data comprises an image of tissue, and wherein determining the classification comprises determining information relating to a medical diagnosis.

In an example, determining a classification prediction for the input data based on the output of the first classification and the second classification comprises:

> if the output of the first classification and the second classification are the same, outputting a classification prediction which is the output of the first classification or the second classification; and
> determining that there is no classification prediction.

According to another aspect, there is provided a computer implemented method of classification, comprising:

obtaining input data;
inputting the input data to a classification model, the classification model applying a first classification, wherein the first classification comprises applying a first classifier and using a predictive threshold corresponding to a first class;
determining a classification prediction for the first class based on the output of the first classification.

In an example, determining a classification prediction comprises:

if the output of the first classification is the first class, outputting a classification prediction which is the first class; and
if the output of the first classification is not the first class, determining that there is no classification prediction.

According to another aspect, there is provided a classification system, comprising one or more processors, configured to perform the above methods.

According to another aspect, there is provided a classification system comprising a classification model trained according to the above methods.

According to another aspect, there is provided a carrier medium comprising computer readable code configured to cause a computer to perform the above methods. The methods are computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

Classifier models have application in a wide range of fields. For example, classifier models can be used in various medical applications. A classifier model can be used to provide a medical diagnosis, by taking as input physiological measurements for example. In another example, a classifier model can be used to analyse medical image data, for example to predict whether an input tissue image contains cancerous cells or to predict whether a specific biomarker is associated with a tissue image.

Such classifier models may be trained using a training dataset. For example, a training dataset may comprise a large number of example inputs, together with labelled classification outputs. A classification method using a classifier model which has been modelled on a training dataset will have some level of inaccuracy when deployed on new input data however.

For example, a binary classifier model outputs a score between 0 and 1 for each data point, which is converted into a classification (positive or negative) based on a predictive threshold. If the score is above the threshold, the output prediction is positive. If the score is below the threshold, the output prediction is negative. The threshold may be 0.5 for example. A binary classifier model could be used to predict whether a whole slide image contains cancerous cells for example. An input whole slide image is predicted to contain cancerous cells if and only if the score given by the classifier model is greater than or equal to 0.5.

The classifier model output is compared with the predictive threshold to generate the output of the classification method (positive or negative). The accuracy of the classification method can be measured by the number of correct classifications as a proportion of the number of total classifications. This can be assessed on a test dataset for example, where the correct classification (positive or negative) is known for each input in the dataset.

In some use cases, for example medical use cases, a high accuracy is needed. Accuracy of the classification can be improved by improving the classifier model performance, where the classifier model performance might be measured by the AUC (described in more detail below). Such improvement might be achieved by further training of the classifier model on a new training dataset for example. However, in some cases, further improvement to the classifier model performance is not possible, for example further training data cannot be easily obtained.

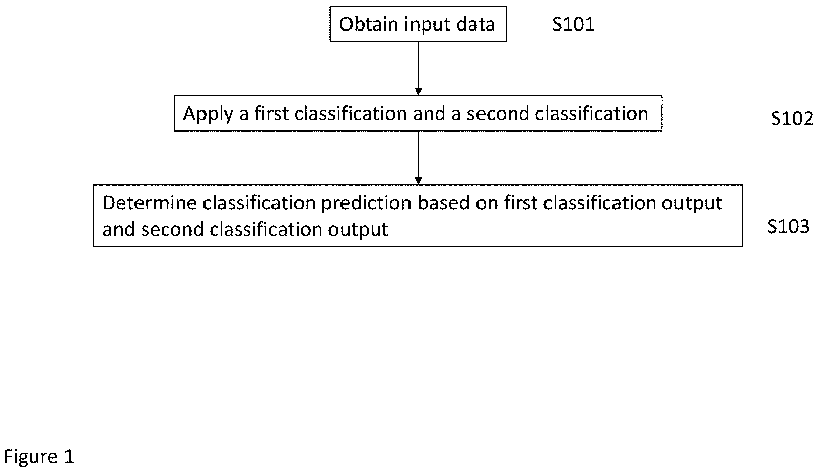

Figure 1 shows a schematic illustration of a method of classification according to an embodiment.

In S101, input data is obtained. The input data may be physiological measurements or an input medical image for example.

In S102, a first classification and a second classification are applied. The first classification and the second classification each output a classification into a positive or negative class. The positive class is also referred to as a second class and the negative class is also referred to as a first class. The positive class is the same for the first classification and the second classification. For example, the positive class might be a medical diagnosis, for example a diagnosis of a disease. Alternatively, the positive class might be a detection of cancerous cells, or an indication of a specific biomarker, for an input image of tissue for example. The first classification is configured to predict more negative cases correctly than the second classification. The second classification is configured to predict more positive cases correctly than the first classification. The second classification is configured to have a higher true positive rate than the first classification, where the true positive rate is the proportion of positive cases which the method predicts correctly as positive.

In S103, the classification prediction is then determined based on the output of the first classification and the second classification. In particular, if the output of the first classification and the second classification are the same, the classification prediction is output as the output of the first classification (or second classification). If the output of the first classification and the second classification are different, a classification prediction is not output. Some further step can then be performed, for example a manual classification. The accuracy of the classification prediction is improved, since cases where the prediction is more uncertain are excluded.

Example methods of classification will now be described.

First Example

There are various indicators of performance of a classification method. The sensitivity of a classification method is the true positive rate (TPR), and is the proportion of positive cases which the method predicts correctly as positive. The specificity of a classification method is the true negative rate (TNR), and is the proportion of negative cases which the model correctly predicts as negative. The specificity of a method is also equal to 1 - FPR, where FPR is the false positive rate. The FPR is the proportion of negative cases which the method incorrectly predicts as positive. The false negative rate (FNR) is the proportion of positive cases which the model incorrectly predicts as negative and is equal to 1 - TPR.

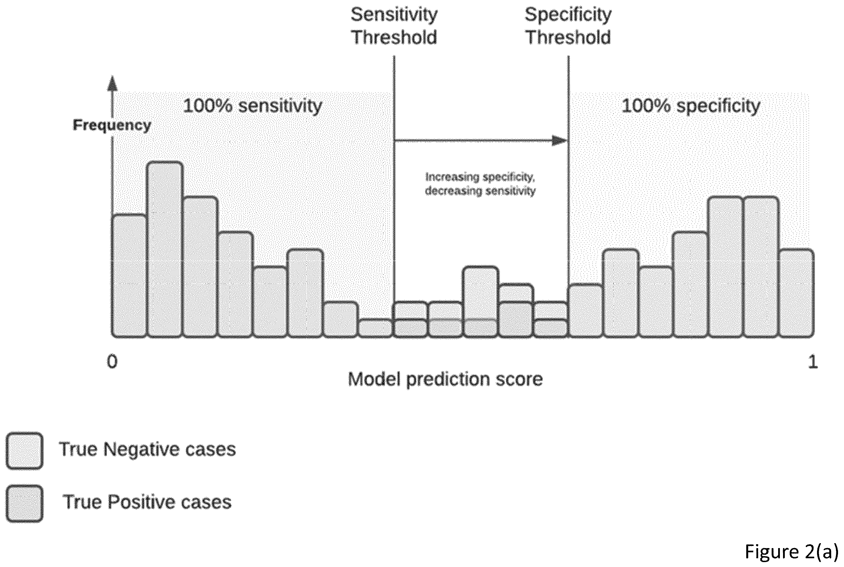

As described above, a binary classifier model outputs a score between 0 and 1 for each data point, which is converted into a classification (positive or negative) based on a predictive threshold. If the score is above the threshold, the output classification is positive. If the prediction score is below the threshold, the output classification is negative. For many classifier models, for example deep neural networks, support vector machines, random forests and others, the sensitivity and specificity of the classification method can be adjusted after training the classifier model by simply shifting the predictive threshold. Figure 2(a) is a schematic illustration of a classifier model output for a dataset. The classifier model output for the positive class (a probability value from 0 to 1) is along the x-axis, in discrete bins of 0.05. The frequency of each classifier model output for the dataset corresponds to the y-axis. The outputs corresponding to cases for which the true value is positive (1) are shown with darker shading, whereas the outputs for cases for which the true value is negative (0) are shown with lighter shading.

A higher predictive threshold results in a classification method with higher specificity, which will be able to predict more negative cases correctly but will fail to predict more positive cases correctly. The line "Specificity Threshold" in Figure 2(a) shows the threshold at which all true negative cases in the dataset are predicted correctly.

The same classifier model, combined with a lower predictive threshold, results in a classification method with higher sensitivity, which will be able to predict more positive cases correctly but will fail to predict more negative cases correctly. The line "Sensitivity Threshold" in Figure 2(a) shows the threshold at which all positive cases in the dataset are predicted correctly. The "specificity" threshold is higher than the "sensitivity" threshold.

A classification method using a classifier model and a higher threshold is configured to predict more negative cases correctly than a classification method using the classifier model and a lower threshold. Further, a classification method based on the sensitivity threshold of the classifier model is configured to predict more positive cases correctly than a classification method based on the specificity threshold of the classifier model.

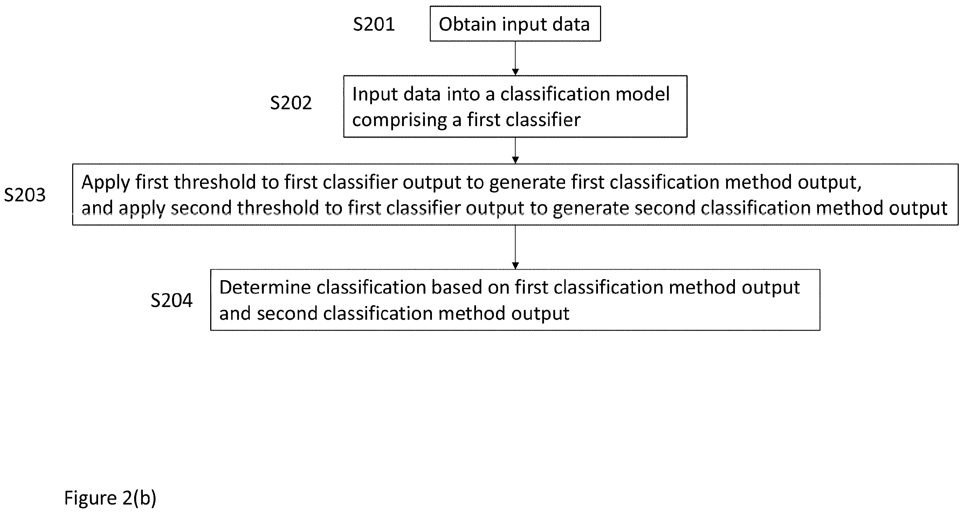

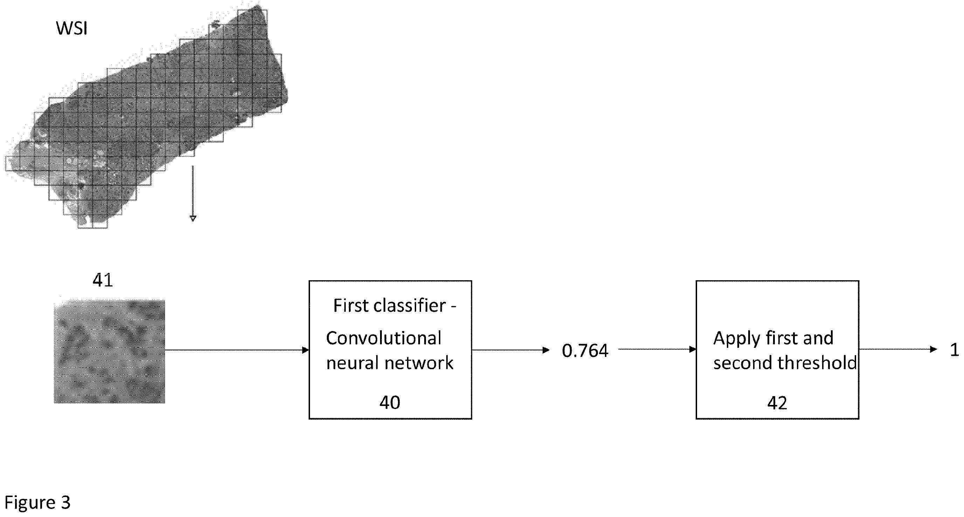

Figure 2(b) shows a method according to the first example. A classification is performed on input image data which corresponds to an image of tissue. A schematic illustration of the process including the input image data 41 is shown in Figure 3. However, it will be understood that in other examples, other types of input data may be used, for example including one or more of: other types of image (such as non-tissue medical images), patient data (such as age, gender, health conditions), liquid biopsy data (for example DNA sequencing data), or blood test data (for example number of blood cells).

In this example, the input image is classified as to whether it corresponds to a specific biomarker, the ER biomarker. The input image is classified into the positive class if it corresponds to the ER biomarker. However, it will be understood that in other examples, other types of classification may be performed, for example to classify whether the image corresponds to a different biomarker, or to cancerous cells for example.

The method according to the first example uses a first classification and a second classification. The first classification and the second classification use the same classifier. However, the predictive threshold is higher for the first classification than for the second classification. The first classification is therefore configured to predict more negative cases correctly than the second classification. The second classification is configured to predict more positive cases correctly than the first classification, in other words the second classification is configured to have a higher true positive rate than the first classification.

In S201, the input data is obtained. In this example, the input data is input image data 41 comprising a plurality of pixels. The input image data 41 in this example is an image tile from a whole slide image of tissue, as shown in Figure 3. In the below description, the pixel data is red-green-blue (of dimension height x width x 3), however the pixel data may alternatively be grayscale (of dimension height x width x 1) for example. The input image data comprises a first number of pixels, where the first number is equal to height x width. The image data may be acquired using a microscope mounted digital camera capturing images of tissue (also referred to as a histological section).

In the specific example described herein, the input image data 41 comprises a tile of an image of a histological section stained with hematoxylin and eosin stain. An example of a whole slide image (WSI) of a histological section stained with hematoxylin and eosin stain is shown in Figure 3 (WSI). A grid is overlaid on the WSI, where each grid square corresponds to a tile. A whole slide image scanner scans an entire tissue slice, resulting in an image of a histological section stained with hematoxylin and eosin stain comprising around 60 000 pixels height by 60 000 pixels width for example. The whole side image is then split into contiguous portions, or tiles. The image portions (tiles) have a fixed height and width. The portions may be contiguous or overlapping within the image. For example, the image tile size may be 512 x 512 pixels. A whole slide image is split into tiles, and each tile is taken separately as input in S201. Other tile sizes may of course be used. For example, a tile size corresponding to a power of 2 may be used, for example: 128 x 128, 256 x 256, 512 x 512, or 1024 x 1024 pixels. Each WSI image may be of a different size, and therefore a different number of portions may be extracted from the input WSI depending on the size of the input WSI. The original image data may be taken as input, i.e. the original pixel values. Alternatively, some pre-processing may be performed on the original pixel values, for example for colour normalisation. A cell segmentation step may be performed initially, and tiles containing only non-cancer tissues discarded. A pre-trained model may be used for the cell segmentation.

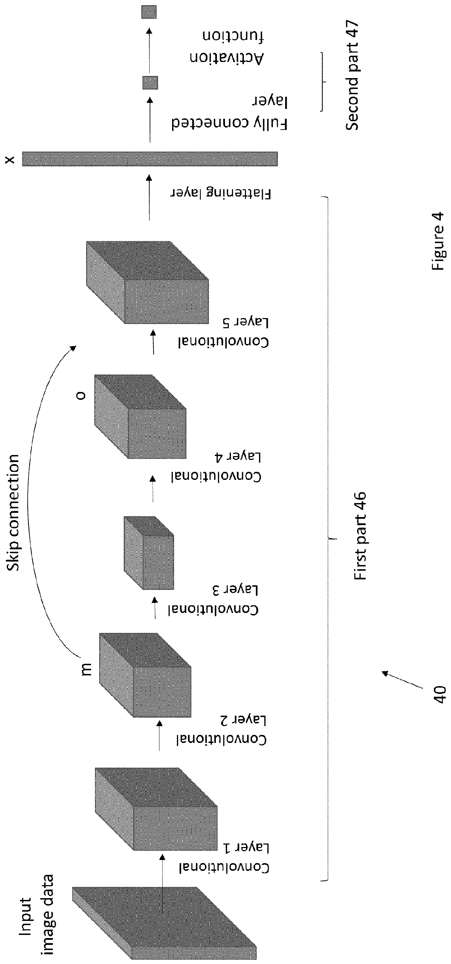

In S202, the input image data 41 (an image tile) is taken as input to a classification model. The classification model comprises a first classifier. In this example, the first classifier is a first convolutional neural network (CNN) 40. An example first convolutional neural network 40 is illustrated in Figure 4.

The first convolutional neural network 40 comprises a first part 46 comprising at least one convolutional layer and a second part 47, a classification part, which takes as input a one dimensional vector. The second part 47 comprises at least one fully connected layer. The first CNN 40 comprises a first part 46 comprising convolutional filters applied to images at various layers of depth and field-of-view, followed by a second part 47 comprising fully connected dense layers and/or pooling layers for data reduction. The filter weights are trainable parameters which are learned during the training stage. While lower level filters detect coarse structures such as edges and blobs, deeper levels capture more complex properties like shape and texture and finally top layers learn to generalize on objects of interest with respect to the identification of the biomarker.

The first CNN 40 is a binary classifier. The first CNN 40 is used to determine whether the input image tile is associated with the specific molecular biomarker or not. The tiles are submitted to the first CNN 40. Per-pixel data is directly input into the first CNN 40. For each tile, the CNN outputs a probability the tile is assigned to the positive class i.e. the tile is associated with the biomarker.

The first CNN 40 shown in Figure 4 is based on a residual network architecture. A residual neural network comprises one or more skip connections. The figure shows a small number of layers for simplicity, however the first CNN 40 may comprise over 100 layers for example.

The first layer in the CNN is a convolutional layer, labelled "convolutional layer 1" in the figure. Each filter in the first layer has a depth matching the depth of the input data. For example, where the input data is RGB, the filter depth in the first layer is 3. For simplicity, the CNN shown in Figure 4 has an input data depth of 1 (i.e. grayscale input data).

The output volume of the first layer is determined by a number of factors.

The depth of the output volume of the first layer corresponds to the number of filters. For example, there may be 32 filters in the first layer, and therefore the output of the first layer has a depth of 32. The filters in the subsequent layer will therefore have a depth of 32.

The height and width of the output volume is determined by the height and width of the input, the receptive field size of the filters (both height and width) and the filter stride. When the stride is 1 then the filters slide one pixel at a time. When the stride is 2 then the filters slide 2 pixels at a time, producing a smaller output volume. Any zero padding used at the borders will also affect the output size.

Each filter is moved along the width and height of the input. At each position, an element-wise multiplication of the input values and the weight values is taken, and the results summed to give a single output value for each position. The output values for one filter form a 2D array. The output arrays from all the filters in the layer are stacked along the depth dimension, and the resulting volume input into the next layer.

Each convolutional layer is followed by an activation layer. An activation layer applies an elementwise activation function, leaving the size unchanged. The activation layers are not shown in the figure for simplicity. For example, the model may comprise one or more ReLU (rectified linear unit) layers, which apply an elementwise activation function. A batch normalisation layer is also implemented after each convolutional layer, where the activation layer is implemented after the batch normalisation layer. The model comprises units comprising a convolutional layer, a batch normalisation layer and an activation layer, or units comprising a first convolutional layer, a first batch normalisation layer, a second convolutional layer, a second batch normalisation layer and an activation layer for example.

The first CNN 40 comprises a plurality of layers for which the output has a smaller dimension than the input, for example the height and/or width is smaller than the input to the layer. In this manner, the height and width decreases through a number of the layers, whilst the depth increases. The first CNN 40 has an "encoder/decoder" structure, whereby the layers first decrease the height and width whilst increasing the depth (via the filter hyper-parameters such as stride size for example), and then increase the height and width whilst decreasing the depth (via pooling layers and/or bilinear up-sampling layers for example). This is illustrated in Figure 4, which illustrates the output sizes of the layers.

The first CNN 40 further comprises one or more pooling layers, which are included to vary the spatial size. The pooling layers are used to increase the width and/or height and decrease the depth of the output. The pooling layers may be "average pooling" layers. An average pooling layer comprises a filter having a spatial extent and stride, which is moved across the input, taking the average value at each position. Functions other than the average can be used however, for example, max pooling. Up-sampling layers, for example one or more bilinear up-sampling layers may additionally or alternatively be included in order to increase the height and/or width.

The first CNN 40 further comprises at least one skip connection. In practice, the model may comprise multiple skip connections, however for simplicity a small number of layers and a single skip connection is shown in Figure 4. The second layer "Convolutional layer 2" generates an output, referred to as output m. The fourth layer "Convolutional layer 4" generates an output o, having the same dimension as the output m. The input to the "Convolutional layer 5" is generated from the output of the first layer m as well as the output of the fourth layer o. Inputting the output from the earlier layer directly to the later layer is a "skip connection". The outputs in this example are combined by pixel-wise addition. Concatenation could alternatively be used, where the outputs are different sizes for example. Using one or more skip connections, information from the downstream is fed directly to the upstream. This maintains high level global and regional visual features throughout the network. Inputting features from an earlier layer directly into a later layer, skipping one or more intervening layers, provides context.

A flattening layer is included after the final convolutional layer. The flattening layer converts the output data from the final convolutional layer into a 1-dimensional vector x for inputting into the next layer. The layers prior to the flattening layer in this example form the first part of the CNN 46.

One or more fully connected layers are included after the flattening layer. The final fully connected layer outputs a value corresponding to the positive class. An activation function is applied at the output, for example a sigmoid function, to give a probability value. The activation function takes as input the output from the final fully connected layer and normalizes to a probability. Thus the activation function outputs a value between 1 and 0 corresponding to the positive class. The fully connected layer(s) and the activation function form the second part 47 of the first CNN 40.

For each tile, the CNN 40 outputs a probability the tile is assigned to the positive class i.e. the tile is associated with the biomarker. A biomarker is a naturally occurring molecule, gene, or characteristic by which a particular pathological or physiological process, disease, diagnosis, therapy or prognosis can be identified. In the specific example described herein, the biomarker is a cancer biomarker, i.e. a naturally occurring molecule, gene, or characteristic by which a particular type of cancer, or a particularly effective cancer treatment, can be identified. Furthermore, in the example described herein, the biomarker is a molecular biomarker. In this example, the specific biomarker is the ER biomarker. Examples of other biomarkers will be described in more detail below however.

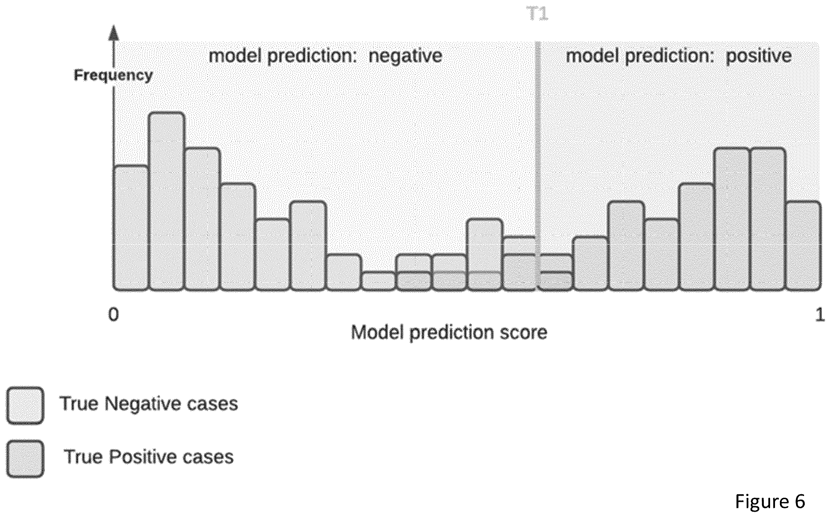

In S203, a first threshold is applied to the output of the first classifier 40. In other words, the probability value output from the first CNN 40 is compared against a first threshold. In the example shown in Figure 3, the probability value output from the first classifier is 0.764. The first threshold is a higher predictive threshold T1. In this example, the first threshold T1 is 0.6. If the output of the first classifier is higher than the higher predictive threshold, the first classification output is 1, corresponding to the positive class. If the output of the first classifier is lower than the higher predictive threshold, the first classification output is 0. Figure 6 is a schematic illustration showing the first predictive threshold, which is indicated by the line T1 on a plot of frequency against classifier model prediction score.

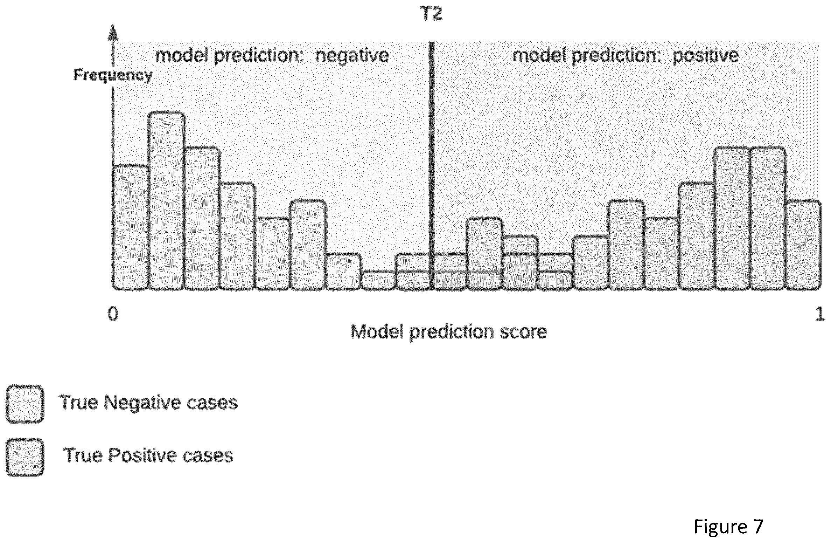

In S203, a second threshold is also applied to the output of the first classifier. In other words, the probability value output from the first CNN 40 is compared separately against a second threshold. The second threshold is a lower predictive threshold T2. In this example, the second threshold T2 is 0.45. If the output of the first classifier is higher than the lower predictive threshold, the second classification output is 1, corresponding to the positive class. If the output of the second classifier is lower than the lower predictive threshold, the second classification output is 0. The second predictive threshold is indicated by the line T2 in Figure 7.

The predictive threshold for the first classification T1 is higher than the predictive threshold for the second classification T2. The first classification is therefore configured to predict more negative cases correctly than the second classification. The second classification predicts more positive cases correctly than the first classification.

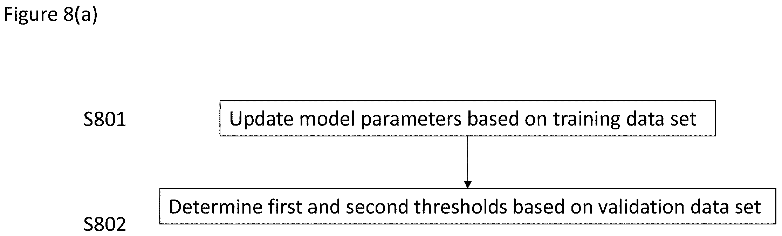

The first predictive threshold for the first classification T1 is higher than the second predictive threshold for the second classification T2. The values of the thresholds are determined during a training stage, which is performed prior to use of the system. The training stage will be described in relation to Figure 8(a) below.

In S204, the final classification prediction is determined based on the first classification output and the second classification output. In this step, if the first classification outputs 1, and the second classification outputs 1, the classification prediction is 1. If the first classification outputs 0, and the second classification outputs 0, the classification prediction is 0. If the first classification and the second classification output different classifications, then no classification prediction is made. Some further step might be performed to determine a final classification. For example, the image may be manually classified by an expert.

In this method, by using two different predictive thresholds, two different classifications can be performed using a single trained classifier, with a single training process. The second classification M2 uses a lower predictive threshold T2, and therefore provides a classification with high sensitivity, producing more reliable positive predictions. The lower predictive threshold is also referred to here as the negative threshold. The first classification M1 uses a higher predictive threshold T1, and therefore provides a classification with high specificity, producing more reliable negative predictions. The higher predictive threshold is also referred to here as the positive threshold. By deploying the two classifications simultaneously, a higher degree of certainty in the classification predictions can be achieved than by applying a single classification using the first classifier, with a threshold of 0.5.

Figure 8(a) is a schematic illustration of a method of training a system for classification in accordance with the first example. The method is used to train a system which can be used in the classification method according to the first example described above.

A training data set and a validation data set, each comprising a plurality of input images, are used in the training method. The images correspond to the intended type of input images for use during the classification method. In the example described here, the input images are image tiles from images of histological sections stained with hematoxylin and eosin stain, as have been described above. Thus the training dataset and the validation data set each comprise image tiles from images of histological sections stained with hematoxylin and eosin stain.

Each image tile is labelled depending on whether or not it corresponds to the specific biomarker that the model is to detect. As described above, the specific biomarker in this example is the ER biomarker. Each image tile is labelled with a 1 if it corresponds to the ER biomarker and 0 if it does not.

In order to generate the labels, information from an IHC staining process may be used for example. For some datasets, an expert may review IHC-stained images and determine the ER status of the target images if they are not already available as metadata for example. These are then used as ground-truth labels for corresponding H&E images during training. Various testing of human samples from the patient through means of genetic, transcriptomics and/or immunological assays may additionally or alternatively be used. These tests are conducted on human samples called biopsies, in liquid and/or solid forms, which then undergo the procedure to inform the molecular status of the sample. The results are then analysed by experts - pathologist for tissue biopsy, hematologist for liquid biopsy, cytopathologist for cytology samples, geneticist for genetic/transcriptomic assay etc - to generate a label 1 or 0 for the corresponding H&E images. The annotation may be performed by a trained pathologist.

In order to prepare the datasets, the same image pre-processing as is intended to be performed on the input images is performed. Thus for each whole slide image, a plurality of image portions (tiles) are obtained. Cell segmentation may be used to discard the tiles containing only non-cancer tissues from the datasets.

The image annotation may be performed separately for each tile of the whole slide image. Alternatively, the annotation may be performed for the whole slide image, and each tile from the image is then labelled with the annotation which was given to the whole slide image. A step of pairing each tile with the label of their corresponding slide is therefore performed in this case.

Thus the training data set and validation data set each comprise a plurality of image tiles, each tile being labelled depending on whether or not it corresponds to the specific biomarker that the model is to detect.

In S801, the image tiles in the training dataset are submitted to the first classifier, the first CNN 40, which generates a probability of the image being assigned to the positive class, in the same manner as has been described above in relation to the inference (deployment) stage.

The first CNN 40 has an associated parameter vector $\theta 1$. The parameters include the filter weights for all of the convolutional layers in the first part of the first CNN 40 as well as the weights for the second part of the first CNN 40. The goal of the training process in S801 is to find a parameter vector $\theta 1'$ so that the difference between the annotations of the images in the training dataset and the outputs of the first classifier for the images is minimised.

The optimal parameters are computed by assigning random values as $\theta 1$ initially, and then updating $\theta 1$ sequentially by computing the gradient of the loss $\frac{\partial D1}{\partial \theta 1}$ and updating $\theta 1$ using the computed gradient. D1 represents a loss function, which is a "per-tile" loss. A cross entropy loss is used in this example:

$$-y_i \log(p_i) - (1 - y_i)\log(1 - p_i)$$

where $y_i$ is the annotation value (1 or 0) and $p_i$ is the classifier output value for an example i in the training dataset. The gradient of the loss with respect to each of the trainable parameters of the classifier model is determined through back-propagation. The gradients are then used to determine the updated parameters, using an optimiser

function. This family of update methods is known as gradient descent (GD), generally defined iteratively as:

$$\theta 1' = \theta 1 - \mu 1 \frac{\partial D1}{\partial \theta 1}$$

where $\mu 1$ is a learning rate, defining how quickly the parameters are updated. The update may be performed based on a batch average. A batch size of 8 tiles can be used for example. An average value loss over 8 tiles is calculated, and the model parameters are updated based on the average loss. Thus the classifier is applied to 8 tiles before the parameters are updated.

An Adam optimization algorithm may be used. The optimisation strategy selected may depend on the performance of each strategy on a use-case however. For example, one of the following optimisation methods may be selected:

- Stochastic Gradient Descent (SGD)
- AdaDelta
- Adam
- AdaMax
- Nesterov Adam Optimiser
- RMSProp

The training may be performed over a plurality of epochs. The number of epochs is the number of times that the classifier is applied to the entire training dataset during training. During each training epoch, the training examples in the training dataset may be inputted to the model in a random order, such that the training examples are inputted in a different order for each epoch.

The classifier model performance can be evaluated after each epoch using the validation dataset. A different sub-set of data from the validation dataset may be used for evaluation after each epoch. After each training epoch, the classifier model accuracy based on a threshold of 0.5 can be determined. Each image tile from a validation dataset is submitted to the first classifier, which generates a probability of the image being assigned to the positive class. The classifier model output is then compared to a threshold of 0.5 to give a classification for the image. It is then determined whether the classification is correct by comparing to the annotation value (the label) for the image. An accuracy is determined as the number of correct classifications divided by the number of classifications performed for the validation data. The accuracy value is an indication of the classifier model performance. Once the classifier model has achieved desired performance, the training is stopped (i.e. no further epochs are performed) and the classifier model parameters are fixed. The desired performance might be determined by meeting of a minimum accuracy (for example 0.8 or 0.9), or by a change in the accuracy between the current epoch and the previous epoch being less than a pre-determined value. Instead of monitoring accuracy, AUC or loss may be used to monitor performed in the same manner for example.

In S802, given the trained model, the predictive thresholds T1 and T2 are then determined, using the validation dataset. In this step, it is assumed that the validation set is mostly similar to the test set. In S802, the image tiles in the validation dataset are submitted to the first classifier, the first CNN 40, which generates a probability of the image being assigned to the positive class, in the same manner as has been described above in relation to the inference (deployment) stage. The classifier model prediction scores, i.e. the probability values output from the classifier model, are then compared to the labels of the images. In this example, from the validation dataset results, the highest probability value for an image with a label 0 (in the negative class) is taken as the first predictive threshold T1. The lowest probability value for an image with a label 1 (in the positive class) is taken as the second predictive threshold T2. The first predictive threshold T1 is thus set to the specificity threshold and the second predictive threshold T2 is set to the sensitivity threshold, as determined from the results of running the first classifier model on the validation dataset. By setting the first predictive threshold T1 to the specificity threshold and the second predictive threshold T2 to the sensitivity threshold, the classification method can generate reliable predictions for both the positive and negative class.

The performance of the full classification method, in which the first classification is applied using the first threshold T1 and the second classification is application using the second threshold T1 as described in relation to Figure 2(b) above, can be assessed using a further test data set. For example, an accuracy of the full classification method can be determined from a test data set.

In this example, the first predictive threshold T1 is set to the specificity threshold and the second predictive threshold T2 is set to the sensitivity threshold. However, in alternative examples, the first predictive threshold T1 is set lower than the specificity threshold and the second predictive threshold T2 is set higher than the sensitivity threshold, whilst still ensuring that the first predictive threshold T1 is higher than the second predictive threshold T2. This increases the number of cases which can be predicted using the classification method. For example, it is common in medical diagnostic systems that an acceptable level of uncertainty or error can be introduced if the benefits outweigh the costs of such uncertainty or error. In a sensitivity/specificity context, this can be achieved by increasing the lower predictive threshold T2 (used by M2) to a value slightly above the sensitivity threshold and decreasing the upper predictive threshold T1 (used by M1) slightly below the specificity threshold. By doing this, the number of cases the classification method can predict is increased.

Given a trained classifier model with relatively good performance, the predictive thresholds are determined in S802 as described above. In the above described example, which assumes that the validation set is mostly similar to the test set, T1 is set to the specificity threshold and T2 is set to the sensitivity threshold for the validation dataset, in order to generate reliable predictions for both classes. With a threshold set to the sensitivity threshold, the classifier model achieves 100% PPV on the validation dataset. The PPV is the Positive Predictive Value, and is given by 100xTPR/(TPR+FPR). With a threshold set to the specificity threshold, the classifier model achieves 100% NPV on the validation dataset, where NPV is the Negative Predictive Value (NPV) and is given by 100xTNR/(FNR+TNR).

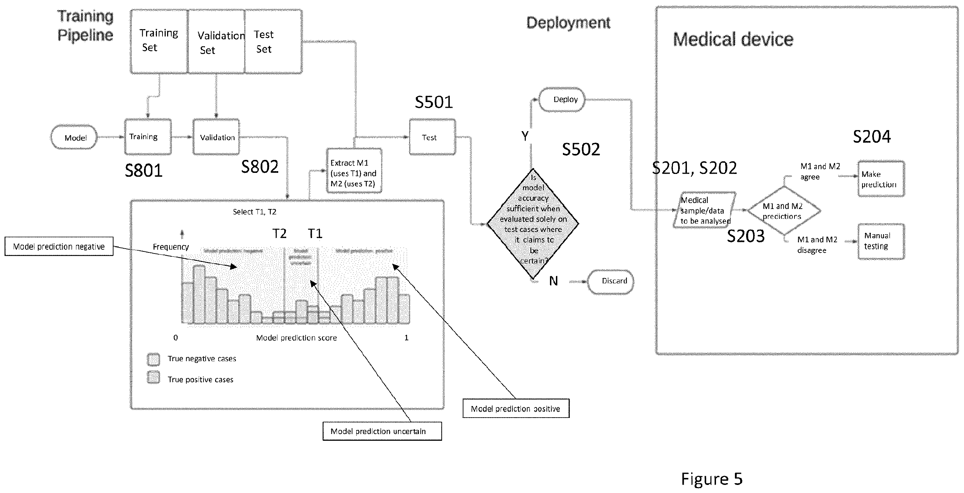

Figure 5 is a schematic illustration showing the training pipeline and the deployment of the trained classification system according to the first example. The first classifier is trained in S801 using the training dataset, as has been described above. The first classifier is then run on the validation dataset, generating a set of model prediction scores as shown in Figure 5. The first threshold T1 and the second threshold T2 are then selected in S802, based on the set of model prediction scores. The first threshold T1 and second threshold T2 are determined in an automated manner. For example, the first predictive threshold T1 is set to the specificity threshold and the second predictive threshold T2 is set to the sensitivity threshold.

In S501, the classification method is then performed on the test dataset, in order to evaluate accuracy of the classification method. In S502, it is determined whether the classification accuracy on the test dataset, evaluated solely on the test cases where the first and second classifications agree, is sufficient for the intended purpose. For example, depending on the intended application, an accuracy of 0.90 or 0.95 may be sufficient. If the accuracy is sufficient, then the system is deployed, as described in relation to Figure 2(b) above. If not, the system is discarded.

During deployment, the input images are received in S201 and analysed by the first classifier in S202. The prediction of the first and second classifications are output in S203. If the predictions agree, then the final classification prediction is made in S204. If not, then a further step may be performed, such as manual testing.

The performance of a predictive classifier model can be measured by one or both of:

- accuracy: the number of correct predictions/number of predictions made by the classifier model with a particular prediction threshold value (for example 0.5); and

- AUC: the area under the receiver operating characteristic curve (ROC curve), which acts as a measure of accuracy across all prediction thresholds.

An ROC curve is a plot of the true positive rate (TPR) against the false positive rate (FPR) for varying threshold values. The true positive rate is also known as the sensitivity, and is the proportion of positive cases which the classifier model predicts correctly as positive with the threshold value. The false positive rate is the proportion of negative cases which the classifier model incorrectly predicts as positive with the threshold value. The accuracy (for a particular threshold value such as 0.5) and AUC of a trained classifier model may be evaluated using a test dataset. For medical use cases, a clinical-grade medical system might use a classifier model having 0.94 to 0.98 accuracy and AUC for example.

A classifier model having a lower accuracy and AUC could be used for applications in which the intended use allows for some margin of error, or the benefits of the true prediction outweigh the risks and impact of false prediction, or there is a human in the loop who confirms the prediction. However, for many use cases, having such a classifier model means that the device is economically unfeasible, for example, because a human must confirm the prediction. This can hamper the adoption of the device into clinical practice. Classifier model performance might be improved by further training of the classifier model on a new training dataset for example. However, in some cases, further improvement to the classifier model performance is not possible, for example further training data cannot be easily obtained.

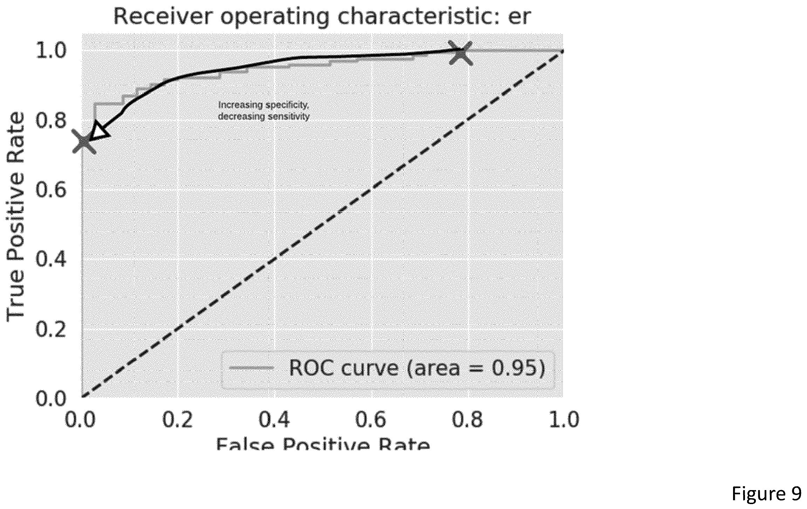

The sensitivity and specificity of classification method however can be adjusted by selecting the predictive threshold used with the classifier model. Figure 9 shows a schematic illustration of a transition from perfect sensitivity (no false negatives) to perfect specificity (no false positives) as observed by traversing the ROC curve from right to left.

In the above described classification method, a first classification having high or perfect sensitivity (few or no false negatives) and a second classification having high or perfect specificity (few or no false positives) as assessed on the validation dataset are used. Accuracy of the classification method can therefore be improved.

In the above described example, the first predictive threshold and the second predictive threshold are determined using the validation data set. However, in an alternative example using training, validation and test sets, the training is performed in S801 using the training set, the performance of the training is validated using the validation set and then the thresholds are determined using the test set.

In the training method described in relation to Figure 8(a), the training dataset and the validation dataset correspond to the same population. However, in alternative embodiments, the training dataset and the validation data set may correspond to different populations. For example, the training dataset may correspond to a general population, for which a large amount of data is available. The validation dataset may correspond to a specific population, for which a smaller amount of data is available and which more closely corresponds to the population of the intended use case. For example, the training dataset may correspond to people from one country or region, and the validation dataset may correspond to people from another country or region. The validation dataset may correspond to patients at a particular hospital. The validation dataset may correspond to patients with a particular trait or characteristic, such as an age range. In this way, the first classifier is trained using a large training dataset, in other words the parameters of the first classifier are updated using the large training dataset. The validation data set is then used to determine the first threshold and the second threshold. This can be considered as a "calibration" stage, in which the first threshold and the second threshold are determined based on a validation data set which corresponds to a population closer to the population for which use is intended.

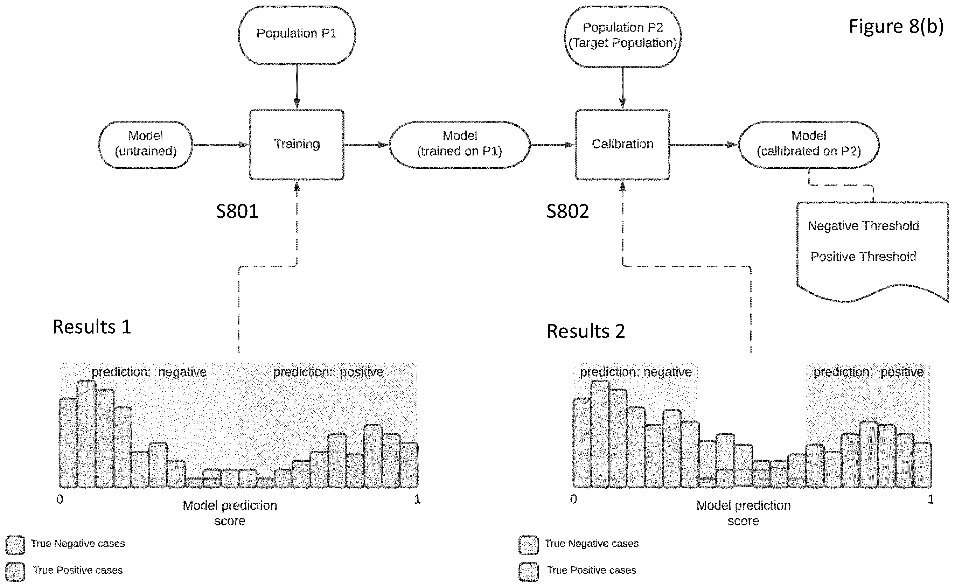

Figure 8(b) is a schematic illustration of a method of training a system for classification in accordance with the first example, in which the validation data set corresponds to a different population to the training data set. The method is used to train a system which can be used in the classification method according to the first example described above.

A training data set and a validation data set, each comprising a plurality of input images, are used in the training method. The images correspond to the intended type of input images for use during the classification method. In the example described here, the input images are image tiles from images of histological sections stained with hematoxylin and eosin stain, as have been described above. Thus the training dataset and the validation data set each comprise image tiles from images of histological sections stained with hematoxylin and eosin stain. The training dataset comprises images corresponding to a first population P1 and the validation data set comprises images corresponding to a second population P2. The second population P2 is a target population, in other words it corresponds more closely to the population for the intended use case than the first population P1. For example, the training dataset may comprise images of tissue from patients of all ages, whereas the validation data set comprises images of tissue from patients in a specific age range.

Each image tile is labelled depending on whether or not it corresponds to the specific biomarker that the model is to detect, as described above. As described above, the specific biomarker in this example is the ER biomarker. Each image tile is labelled with a 1 if it corresponds to the ER biomarker and 0 if it does not. Thus the training data set and validation data set each comprise a plurality of image tiles, each tile being labelled depending on whether or not it corresponds to the specific biomarker that is to be detected.

In S801, the image tiles in the training dataset are submitted to the first classifier, the first CNN 40, which generates a probability of the image being assigned to the positive class. An updated parameter vector $\theta1'$ is determined so that the difference between the annotations of the images in the training dataset and the outputs of the first classifier for the images is minimised, as described above. The untrained first classifier is trained using the training dataset, which corresponds to the first population P1. The output of S801 is a trained classifier, trained on the first population P1.

As described above, after each training epoch, the classifier accuracy based on a threshold of 0.5 can be determined. Each image tile from a validation dataset is submitted to the first classifier, which generates a probability of the image being assigned to the positive class. The classifier output is then compared to a threshold of 0.5 to give a classification for the image. The results are shown schematically in the first graph labelled "Results 1" in the figure, which shows the model prediction scores. All of the scores above 0.5 are predicted as positive, and all of the scores below 0.5 are predicted as negative. The true classifications are also shown in the first graph, with a darker shading indicating the true value is positive.

It is determined whether the classification is correct by comparing to the annotation value (the label) for the image. An accuracy is determined as the number of correct classifications divided by the number of classifications performed for the validation data. The accuracy value is an indication of the classifier model performance. Once the classifier model has achieved desired performance, the training is stopped (i.e. no further epochs are performed) and the classifier parameters are fixed.

In S802, given the trained model, the predictive thresholds T1 and T2 are then determined, using the validation dataset. The validation data set corresponds to a second population P2, the target population. S802 can therefore be considered as a calibration process. The trained model is taken as input, and the predictive thresholds are determined.

As described previously, in S802, the image tiles in the validation dataset are submitted to the first classifier, which generates a probability of the image being assigned to the positive class, in the same manner as has been described above in relation to the inference (deployment) stage. The classifier model prediction scores, i.e. the probability values output from the classifier model, are then compared to the labels of the images. The classifier prediction scores are shown in the graph "Results 2". In this example, from the validation dataset results, the highest probability value for an image with a label 0 (in the negative class) is taken as the first predictive threshold T1. The lowest probability value for an image with a label 1 (in the positive class) is taken as the second predictive threshold T2. The first predictive threshold T1 is thus set to the specificity threshold and the second predictive threshold T2 is set to the sensitivity threshold, as determined from the results of running the first classifier model on the validation dataset. By setting the first predictive threshold T1 to the specificity threshold and the second predictive threshold T2 to the sensitivity threshold, the classification method can generate reliable predictions for both the positive and negative class.

The performance of the full classification method, in which the first classification is applied using the first threshold T1 and the second classification is application using the second threshold T1 as described in relation to Figure 2(b) above, can be assessed using a further test data set. For example, an accuracy of the full classification method can be determined from a test data set. The test data set in this example also corresponds to the second population P2.

In this example, the first predictive threshold T1 is set to the specificity threshold and the second predictive threshold T2 is set to the sensitivity threshold. However, in alternative examples, the first predictive threshold T1 is set lower than the specificity threshold and the second predictive threshold T2 is set higher than the sensitivity threshold, whilst still ensuring that the first predictive threshold T1 is higher than the second predictive threshold T2.

The step of calibration in S802 allows the model to be adjusted based on a target hospital population for example, in other words adjusting for a population shift. This is done by determining the prediction thresholds T1 and T2 to adjust for a distribution change in the prediction scores resulting from the population change. An intermediate step of adjusting the weights of the model to adjust for the population change may also be included. For example, a second training dataset which corresponds to the second population P2 may be used to perform a further training process after the training process performed using the first training dataset. In this further training process, the parameters of the first classifier are further adjusted based on data corresponding to the target population. The first and second thresholds are then determined in S802 as described above.

In the above described example, the first classifier is trained, and then the first predictive threshold and second predictive threshold are determined according to the target population. During the calibration stage S802, the input images are taken as input to the first classifier. The value output from the final layer before the prediction is output as the prediction score. The target population prediction score distribution is therefore generated. The first and second thresholds are then determined.

Table 1 shows results generated using a first method of classification according to the first example, which classifies images from a test dataset as corresponding the ER biomarker. The method uses a classifier model as described above, with a first and second threshold. Table 1 also shows results generated using a first method of classification according to a comparative example, which classifies images from a test dataset as corresponding the ER biomarker. The method uses the same classifier model as described above, with a single threshold of 0.5.

Table 1 also shows results generated using a second method of classification according to the first example, which classifies images from a test dataset as corresponding to the PR biomarker. The method uses a classifier model as described above, with a first and second threshold. Table 1 also shows results generated using a second method of classification according to a comparative example, which classifies images from a test dataset as corresponding to the PR biomarker. The method uses the same classifier model as described above, with a single threshold of 0.5.

Table 1

| | Comparative Example | | First Example | |
|---|---|---|---|---|
| | ER bio marker | PR bio marker | ER bio marker | PR bio marker |
| Accuracy | 0.82234957 | 0.768361582 | 0.870090634 | 0.826086957 |
| F1 | 0.89084507 | 0.836653386 | 0.926243568 | 0.889655172 |
| AUC | 0.825141878 | 0.756788921 | 0.823986358 | 0.721239607 |
| FPR | 0.484848485 | 0.47008547 | 0.689655172 | 0.530612245 |
| | | | | |
| FNR | 0.106007067 | 0.113924051 | 0.010989011 | 0.044444444 |
| PPV | 0.887719298 | 0.79245283 | 0.870967742 | 0.832258065 |
| NPV | 0.53125 | 0.696629213 | 0.857142857 | 0.793103448 |
| Sensitivity | 0.893992933 | 0.886075949 | 0.989010989 | 0.955555556 |
| Specificity | 0.515151515 | 0.52991453 | 0.310344828 | 0.469387755 |
| PLR | 1.843860424 | 1.884925201 | 1.434065934 | 1.800854701 |

(continued)

| | Comparative Example | | First Example | |
|---|---|---|---|---|
| | ER bio marker | PR bio marker | ER bio marker | PR bio marker |
| **NLR** | 0.205778424 | 0.214985708 | 0.035409035 | 0.09468599 |

In the above Table 1, the PLR is the positive likelihood ratio and the NLR is the negative likelihood ratio.

Modification of first example

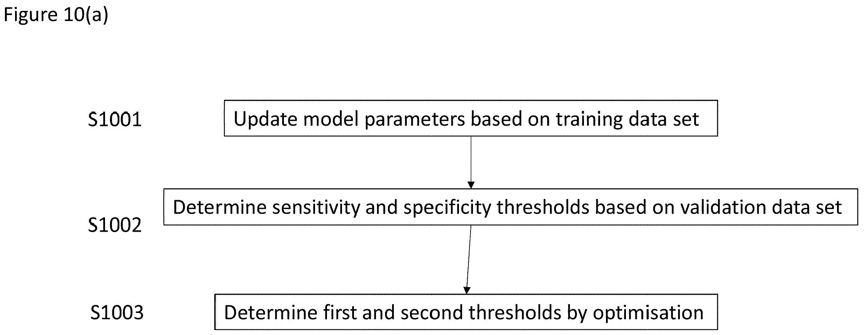

Figure 10(a) is a schematic illustration of a method of training a system for classification according to a modification of the first example, in which the lower predictive threshold T2 can be set to a value above the sensitivity threshold and the upper predictive threshold T1 can be set to a value below the specificity threshold. By doing this, the number of cases the model can predict can be increased.

In S1001, the first classifier 40 is trained using the training dataset, in the same manner as described in relation to S801 above.

In S1002, the sensitivity and specificity thresholds are determined using the validation data set, in the same manner as described in relation to S802 above.

In S1003, the first and second thresholds are determined using an optimisation process. In the method according to the modification of the first example, instead of setting the first and second thresholds as the specificity and sensitivity thresholds respectively, an optimisation process is performed to determine the first and second thresholds.

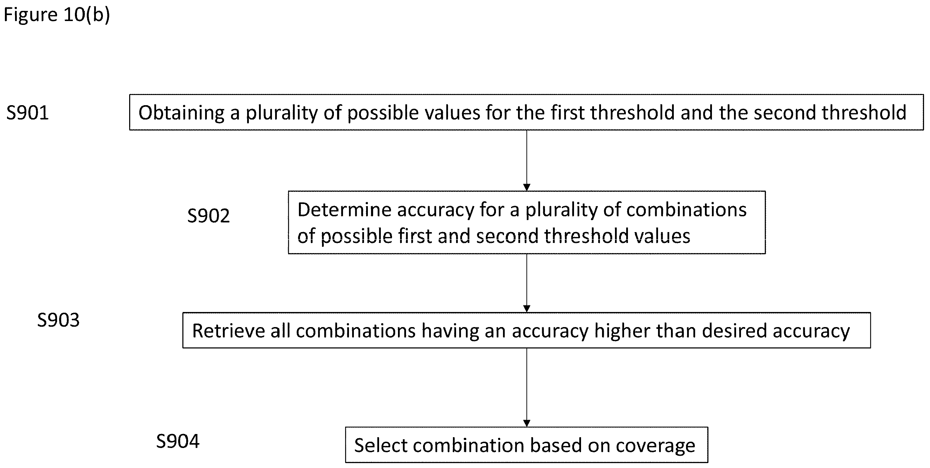

An example optimization process which may be performed in S1003 will now be described in relation to Figure 10(b).

In S901, a first set of possible values are obtained for the first threshold and a second set of possible values are obtained for the second threshold. All of the values in the first set and the second set are greater than or equal to the sensitivity threshold and less than or equal to the specificity threshold. The first set of possible values is obtained by taking a fixed number of evenly spaced values between the sensitivity threshold value and the specificity threshold value, including the specificity threshold value but not including the sensitivity threshold value. The second set of possible values is obtained by taking a fixed number of evenly spaced values between the sensitivity threshold value and the specificity threshold value, including the sensitivity threshold value but not including the specificity threshold value.

In this example, the specificity threshold is 0.65 and the sensitivity threshold is 0.4. A set of evenly spaced values at increments of 0.025 is taken as the first set of values and the second set of values. The first set of values comprises the values {0.425, 0.450, 0.475, 0.500, 0.525, 0.550, 0.575, 0.600, 0.625, 0.650}. The second set of values comprises the values {0.400, 0.425, 0.450, 0.475, 0.500, 0.525, 0.550, 0.575, 0.600, 0.625}.

In S902, an accuracy value is calculated for each of a plurality of combinations of possible first threshold values and possible second threshold values. The accuracy is determined from the test data set. In this step, each value from the first set is combined with each lower value from the second set. The inputs from the test data set are run through the first classifier, and the output probability values from the first classifier are compared against the first threshold value and second threshold value in the combination to give the classification predictions. The accuracy for the combination is then determined as the number of correct classification predictions divided by the total number of classification predictions. This is repeated for each of the plurality of combinations.

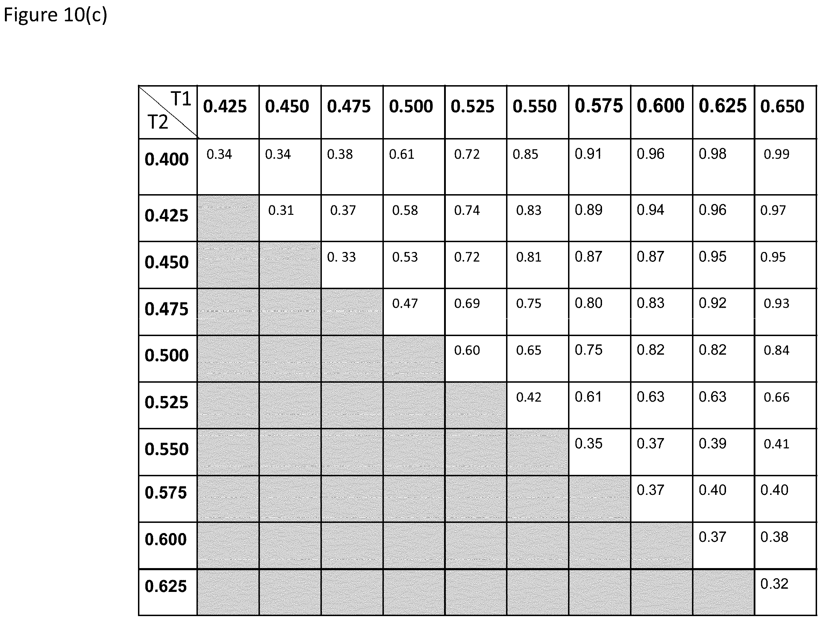

The results of this step are illustrated for the present example in Figure 10(c). Each value from the first set {0.425, 0.450, 0.475, 0.500, 0.525, 0.550, 0.575, 0.600, 0.625, 0.650} is shown along the top of the grid. Each value from the second set {0.400, 0.425, 0.450, 0.475, 0.500, 0.525, 0.550, 0.575, 0.600, 0.625} is shown down the left hand side of the grid. The remaining cells in the grid show the accuracy value (for the cells corresponding to the possible combinations) or are empty (for the cells corresponding to combinations where the value from the second set is lower than the value from the first set). Each value from the first set is combined with each lower value from the second set, resulting in the combinations: (0.425, 0.400), (0.450, 0.400), (0.450, 0.425), .... (0.650, 0.600), (0.652, 0.600) having corresponding accuracy values. For each combination, the first threshold value is higher than the second threshold value. Figure 10(c) shows the accuracy values calculated for each of the combinations.

In S903, all of the combinations of first and second threshold values resulting in an accuracy score greater than or equal to the desired accuracy for the intended application are retrieved. The desired accuracy is a pre-determined accuracy value. In this example, the desired accuracy is 0.9. In this example, the combinations (0.575, 0.400), (0.600, 0.400), (0.600, 0.425), (0.625, 0.400), (0.625, 0.425), (0.625, 0.450), (0.625, 0.475), (0.650, 0.400), (0.650, 0.425), (0.650, 0.450), (0.650, 0.475) result in an accuracy of greater than 0.9. These combinations are therefore retrieved in S903.

In S904, one combination from the retrieved combinations is selected. The combination is selected based on coverage. For example, the combination of the retrieved combination which predicted a classification for the greatest number of results from the test data set is selected. Alternatively, the combination which has the greatest difference between the first threshold value and the second threshold value is selected. In this example, the combination (0.625, 0.475) is selected as having the greatest coverage. The first threshold is therefore set to 0.625 and the second threshold is set to 0.475 in S1003.

Second example

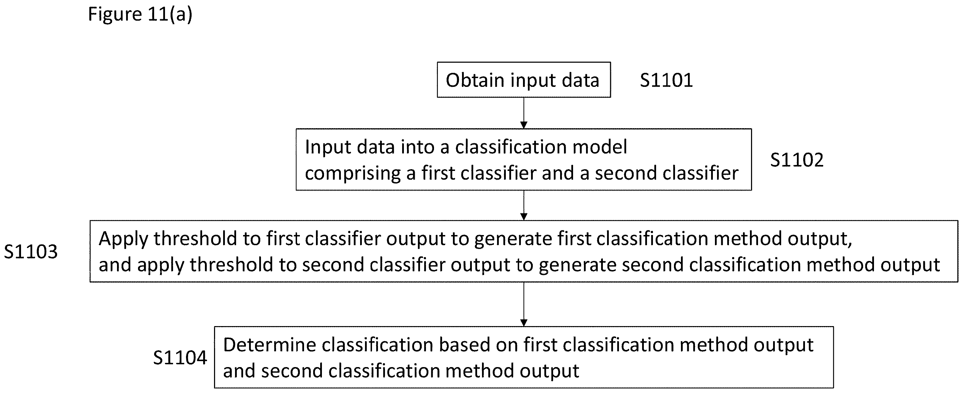

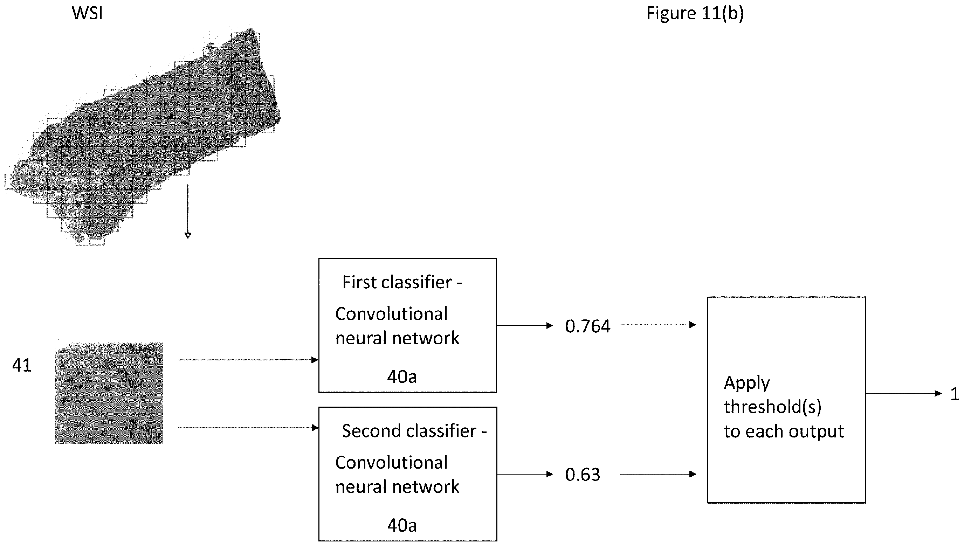

Figure 11(a) shows a method of classification according to a second example. In the method described in relation to Figure 11(a), a classification method is performed on the same input image data as described in relation to the first example. Figure 11(b) shows a schematic illustration of the method including the input data.

The method according to the second example also uses a first classification and a second classification. However, the first classification and the second classification use different classifiers. The first classification uses a first classifier which is configured to predict more negative cases correctly than a second classifier, which is used for the second classification. The second classifier is configured to have a higher true positive rate than the first classifier. In the second embodiment, two separate classifiers are trained, one of which has high specificity and low sensitivity, and the other high sensitivity and low specificity.

In S1101, the input data is obtained in the same manner as described in relation to S201 above.

In S1102, the input image data 41 (image tile) is taken as input to a classification model. The classification model comprises a first classifier and a second classifier. Thus the input image data 41 (image tile) is taken as input to the first classifier and is also separately taken as input to the second classifier. In this example, the first classifier is a convolutional neural network (CNN) 40 as has been described in relation to Figure 4 above. The second classifier is also a convolutional neural network (CNN) 40 as has been described in relation to Figure 4 above. In this example, the first classifier and the second classifier have the same model architecture, but are trained using different training datasets, and therefore may have different parameter values. The structure of the classifiers, as described in relation to Figure 4 above, is the same. However, in alternative embodiments, the first classifier and the second classifier have different model architectures. For example, the first classifier and the second classifier may have different numbers of layers, different numbers of filters in the layers, or different skip connections.

In S1103, a first threshold is applied to the output of the first classifier 40a. In other words, the probability value output from the first CNN 40a is compared against a first threshold. In the example shown in Figure 11(b), the probability value output from the first classifier 40a is 0.764. In this example, the first predictive threshold used with the first classifier 40a is the specificity threshold for the first classifier 40a determined from the validation dataset. If the output of the first classifier is higher than the first predictive threshold, the first classification output is 1. If the output of the first classifier is lower than the first predictive threshold, the first classification output is 0.

In S1103, a second threshold is applied to the output of the second classifier 40b. In other words, the probability value output from the second CNN 40b is compared separately against a second threshold. In this example, the second predictive threshold used with the second classifier 40b is the sensitivity threshold for the second classifier 40b determined from the validation dataset. If the output of the second classifier 40b is higher than the second predictive threshold, the second classification output is 1. If the output of the second classifier is lower than the second predictive threshold, the second classification output is 0.

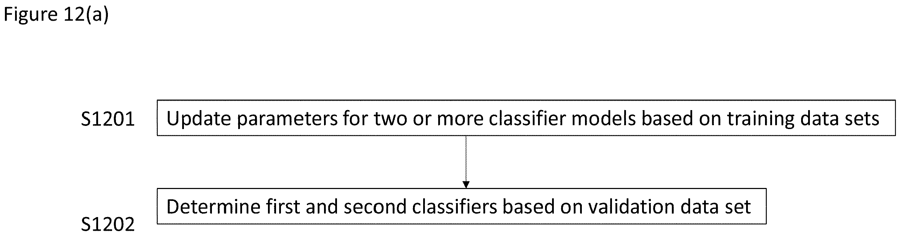

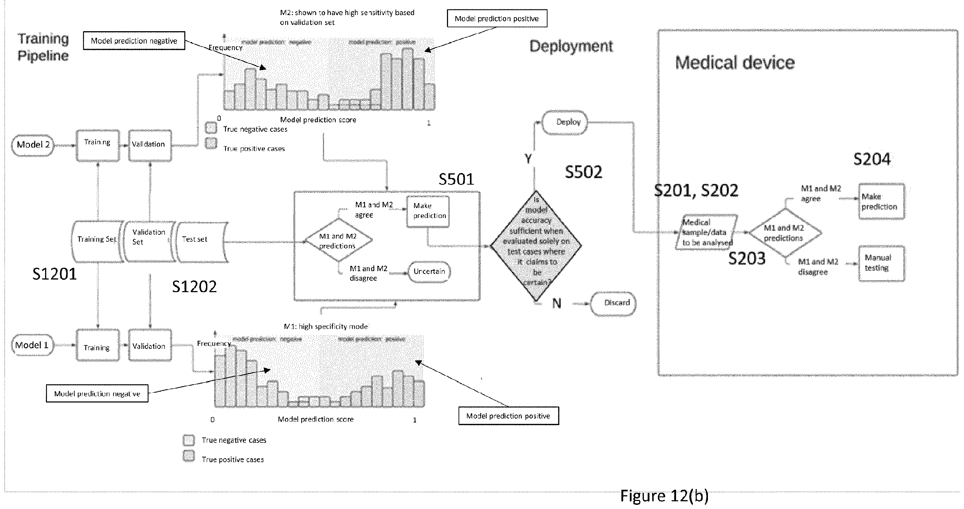

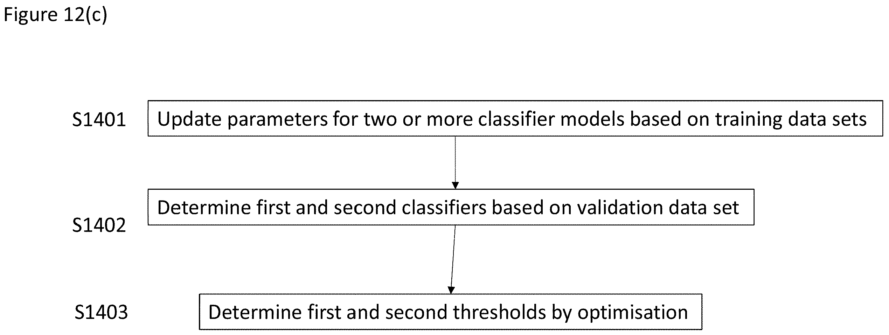

In this example, the first predictive threshold used with the first classifier 40a is the specificity threshold for the first classifier 40a determined from the validation dataset and the second predictive threshold used with the second classifier 40b is the sensitivity threshold for the second classifier 40b determined from the validation dataset. How these thresholds are determined will be described in relation to Figure 12 below. However, in alternative examples, the first and second thresholds are set to the same, pre-determined value. For example, the first and second thresholds may be set to 0.5.

The first classification is configured to predict more negative cases correctly than the second classification. The second classification is configured to predict more positive cases correctly than the first classification. The first classifier 40a used for the first classification, which is configured to predict more negative cases correctly, is obtained during a training stage, which is performed prior to deployment. The second classifier 40b used for the second classification, which is configured to predict more positive cases correctly, is also obtained during the training stage. The second classifier 40b is selected to have a higher true positive rate than the first classifier.

In S1104, the classification prediction is determined based on the first classification output and the second classification output. In this step, if the first classification outputs 1, and the second classification outputs 1, the classification prediction is 1. If the first classification outputs 0, and the second classification outputs 0, the classification prediction is 0. If the first classification and the second classification output different classifications, then no classification prediction is made. Some further step can then be performed to determine a final classification. For example, the image may be manually classified by an expert.

Figure 12(a) is a schematic illustration of a method of training a classification system in accordance with the second example. The method is used to train a classification system which can be used in the classification method according to the second example described above.

A training data set and a validation data set, each comprising a plurality of images, are used. The images correspond to the intended type of input images. As described previously, the training dataset and the validation dataset may correspond to the same population, or the training dataset may correspond to a first population and the validation data set may correspond to a second, target, population.

In the example described here, the input images are image tiles from images of histological sections stained with hematoxylin and eosin stain. Thus the training dataset and the validation data set each comprise image tiles from images of histological sections stained with hematoxylin and eosin stain. As described in relation to the first example, each image tile is also labelled depending on whether or not it corresponds to the specific biomarker that the model is to detect.

In the example described here, the training data set is split into five separate training data subsets. Each image in the training data set is randomly allocated to one of five separate training data subsets. Each training data subset thus comprises different images. Each subset has the same, or substantially the same, number of images.

In S1201, five separate classifiers, A, B, C, D and E, are trained. Each classifier has the same model architecture, but uses a different training data subset.

The image tiles from a first training data subset are submitted to classifier A, which generates a probability of being assigned to the positive class. Classifier A has an associated parameter vector $\theta$A. The optimal parameters are computed by assigning random values as $\theta$A and then updating $\theta$A sequentially by computing the gradient of the loss $\dfrac{\partial DA}{\partial \theta A}$ and updating $\theta$A using the computed gradient. DA represents a loss function, which is a "per-tile" loss. A cross entropy loss is used as described previously. The gradient of the loss with respect to each of the trainable parameters of the first classifier is determined through back-propagation. The gradients are then used to determine the updated parameters, using an optimiser function, as has been described previously.

The image tiles from a second training data subset are submitted to classifier B, which generates a probability of being assigned to the positive class. Classifier B has an associated parameter vector $\theta$B. The optimal parameters are computed by assigning random values as $\theta$B and then updating $\theta$B sequentially by computing the gradient of the loss $\dfrac{\partial DB}{\partial \theta B}$ and updating $\theta$B using the computed gradient. In this example, the same form of loss function is used to train each classifier. The gradient of the loss with respect to each of the trainable parameters of the model is determined through back-propagation. The gradients are then used to determine the updated parameters, using an optimiser function as described previously. In this example, the same learning rate $\mu$ is used for each classifier.

The third, fourth and fifth training data subsets are used to train classifiers C, D and E respectively in the same manner. In this example, the only difference between the five classifiers is therefore the training data used for the training process in S1201.

For each classifier, the model performance is evaluated using data from the validation dataset as described previously. Once the training has achieved the desired performance, the model parameters are fixed for each classifier.

In S1202, the same data from the validation dataset is inputted to each of the five classifiers. The prediction scores, i.e. the probability values output from the classifiers, are then compared to the image labels. The specificity threshold and sensitivity threshold are then calculated for each classifier. For each classifier, the validation dataset results are used to determine the highest output probability value for an image with a label 0 (in the negative class) - this is the specificity threshold. For each classifier, the lowest output probability value for an image with a label 1 (in the positive class) is determined as the sensitivity threshold. The classifier corresponding to the highest specificity threshold is selected as the first classifier, which will be able to predict more negative cases correctly than the other classifiers. The classifier with the lowest sensitivity threshold is selected as the second classifier, which will be able to predict more positive cases correctly than the other classifiers. The first predictive threshold to be used with the first classifier is set to the specificity threshold of the selected classifier. The second predictive threshold to be used with the second classifier is set to the sensitivity threshold of the selected classifier. In this second example, two models are selected, a first model to predict the negative cases and a second model to predict the positive cases. The specificity threshold is then selected for the first model and the sensitivity threshold is selected for the second model. This approach may be used for applications in which some models are very good at predicting only negatives but not positives, whereas other models are very good at predicting positives but not negatives.

The performance of the full classification, in which the first classification is applied using the first classifier and the second classification is applied using the second classifier as described in relation to Figure 11(a) above, can then be assessed using a test data set.

In the above example, five separate classifiers are trained, with the classifier corresponding to the highest specificity threshold selected as the first classifier and the classifier with the lowest sensitivity threshold selected as the second classifier. However, in alternative examples, only two classifiers are trained, with the classifier corresponding to the higher specificity threshold selected as the first classifier, and the other classifier selected as the second classifier. In alternative examples, more than two classifiers are trained, with the classifier corresponding to the highest specificity threshold selected as the first classifier and the classifier with the lowest sensitivity threshold selected as the second classifier.

In the above example, the classifier corresponding to the highest specificity threshold is selected as the first classifier and the classifier with the lowest sensitivity threshold is selected as the second classifier. Alternatively however, the classifier corresponding to the highest specificity using a threshold of 0.5 is selected as the first classifier and the classifier with the highest sensitivity using a threshold of 0.5 is selected as the second classifier. The first predictive threshold and second predictive threshold are then both set to 0.5.

In the above example, each of the plurality of classifiers is trained with a separate subset of the training dataset, where each image is randomly allocated to one of the subsets. However, in alternative examples, the images may be allocated based on one or more properties of the images. For example, one or more of the subsets may have more positive examples than the others. For example, the images may be allocated so that two of the subsets have 80% positive examples, one of the subsets has 50% positive examples, and two of the subsets have 20% positive examples. In the above example, the subsets have substantially the same number of images, however alternatively some of the subsets may have many more images than others.

In the above example, each of the plurality of classifiers has the same model architecture. However, in alternative examples, some or all of the classifiers can have different model architectures, for example the classifiers may have different numbers of layers, different numbers of filters in the layers, or different skip connections.

In the above example, each of the plurality of classifiers is trained using the same hyper-parameters. However, in alternative examples, some or all of the classifiers can be trained using different hyper-parameters, for example the learning rate may be different.

Figure 12(b) is a schematic illustration showing the training pipeline, and the deployment of the trained classification system, in accordance with the second example. Two classifiers are trained in S1201 using the training dataset, as has been described above. The classifiers are then run on the validation dataset, generating a set of model prediction scores for each classifier as shown in Figure 12(b). The first classifier and the second classifier are then selected, based on the set of model prediction scores. The first classifier and the second classifier are determined in an automated manner. For example, the first classifier is selected as the classifier corresponding to the highest specificity threshold, and the second classifier is selected as the classifier with the lowest sensitivity threshold, as determined based on the validation dataset results.

In S501, the full classification method is then performed on the test dataset, in order to evaluate accuracy of the method. In S502, it is determined whether the accuracy on the test dataset, evaluated solely on the test cases where it claims to be certain (i.e. whether the first and second classification agree) is sufficient for the intended purpose. If the accuracy is sufficient, then the system is deployed, as described in relation to Figure 11(a) above. If not, the system is discarded.

During deployment, the input images are received in S1101 and analysed by the first and the second classifier in S1102. The prediction of the first and second classifications are output in S1103. If the predictions agree, then the final classification prediction is made in S1104. If not, then a further step may be performed, such as manual testing.

Modification of second example

Figure 12(c) is a schematic illustration of a method of training a classifier according to a modification of the second example.

In S1401, a plurality of classifiers are trained, in the same manner as described in relation to S1201 above.

In S1402, the first and second classifiers are selected, in the same manner described in relation to S1202 above. As described in relation to S1202, as part of this step, the sensitivity threshold of the second classifier and the specificity threshold of the first classifier are determined using the validation data set.

In the second example described above, the first predictive threshold used with the first classifier 40a is set as the specificity threshold for the first classifier 40a determined from the validation dataset and the second predictive threshold used with the second classifier 40b is set as the sensitivity threshold for the second classifier 40b determined from the validation dataset. However, in the method according to the modification of the second example, an optimisation process is performed to determine the first and second thresholds.

In S1403, the first and second thresholds are determined using an optimisation process. The example optimization process described in relation to Figure 10(b) above may be performed in this step.

A first set of possible values are obtained for the first threshold and a second set of possible values are obtained for the second threshold. In this example, all of the values in the first set are greater than or equal to the sensitivity threshold of the first classifier and less than or equal to the specificity threshold of the first classifier, whereas all of the values in the second set are greater than or equal to the sensitivity threshold of the second classifier and less than or equal to the specificity threshold of the second classifier. For example, the first set of possible values may be obtained by taking a fixed number of evenly spaced values from the sensitivity threshold value for the first classifier to the specificity threshold value for the first classifier, including the specificity threshold value and the sensitivity threshold value. The second set of possible values may be obtained by taking a fixed number of evenly spaced values from the sensitivity threshold value of the second classifier to the specificity threshold value of the second classifier, including the sensitivity threshold value and the specificity threshold value.

An accuracy is then determined for each of a plurality of combinations of possible first threshold values and possible second threshold values. In this step, each value from the first set is combined with each value from the second set. The inputs from the test data set are run through the first and second classifiers. The first classifier model outputs are compared against the first threshold value in the combination and the second classifier model outputs are compared against the second threshold value in the combination to give the classification predictions. The accuracy is then determined for each of the combinations.

All of the combinations of first and second threshold values resulting in an accuracy score greater than or equal to the desired accuracy for the application are retrieved, and a combination from the retrieved combinations is selected based on coverage. For example, the combination which classified the most results from the test data set out of the retrieved combinations is selected.

Third Example

In the first example, the classification method is applied on a per-tile basis. An image tile is taken from a whole slide image, and taken as input to the first classifier. A first classification using a first threshold and a second classification using a second threshold is applied. A classification prediction as to whether the image tile corresponds to the ER biomarker is then determined.

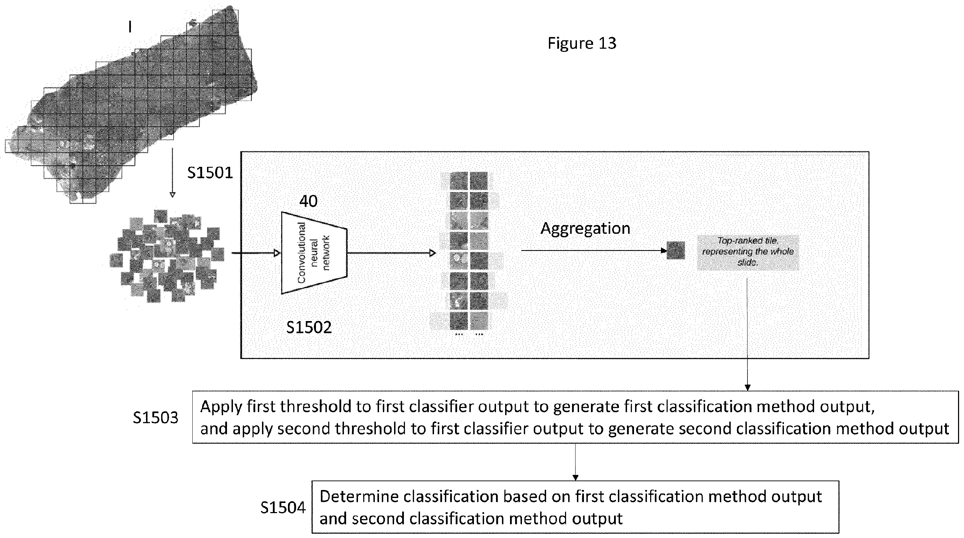

Figure 13 is a schematic illustration of a method of classification according to a third example, in which the classification method is applied on a per-image basis. In other words, a classification prediction as to whether the whole slide image corresponds to the ER biomarker is obtained.

In S1501, the input data is obtained. The input image data in this example is an image tile from a whole slide image of tissue as described previously. In this example, multiple image tiles are obtained from the whole slide image, as shown in relation to Figure 13. Cell segmentation may be used to discard tiles containing only non-cancer tissues.

In S1502, each input image tile is taken separately as input to a classification model comprising a first classifier, which in this example is a first CNN 40 as described in relation to the first example. The first classifier outputs a probability for each image tile, that the image tile is associated with the ER biomarker.

An aggregation step is then performed. In this example, the aggregation step comprises applying a pooling operator. The image tile corresponding to the highest probability value is identified. This image tile will be referred to as the "top-ranked" image tile. This "top-ranked" image tile is then used to classify the image in the subsequent steps of the classification method.

In S1503, the first threshold is applied to the output of the first classifier 40 for the top-ranked image tile. In other words, the probability value output from the first CNN 40 for the top-ranked image tile is compared against the first threshold, to give the output of the first classification. The second threshold is applied to the output of the first classifier 40 for the top-ranked image tile. In other words, the probability value output from the first CNN 40 for the top-ranked image tile is compared separately against the second threshold, to give the second classification. The first and second thresholds are determined during a training stage, as described previously in relation to the first example.

In S1504, the final classification prediction for the whole slide image is determined based on the first classification output and the second classification output. In this step, if the first classification outputs 1, and the second classification outputs 1, the classification prediction is 1. If the first classification outputs 0, and the second classification outputs 0, the classification prediction is 0. If the first classification and the second classification output different classifications, then no classification prediction is made. Some further step might be performed to determine a final classification. For example, the image may be manually classified by an expert.

In the third example, during deployment, the first CNN classifier 40 returns probabilities on a per-tile basis, and these individual scores are aggregated through a max operator. Other non-trainable aggregation functions, such as averaging, may alternatively be used. The first classifier 40 is trained in the same manner as for the first example. The classification prediction for the whole slide image is taken as the classification prediction for a single "representative" tile.

In alternative examples, a trainable aggregation function is used. An indication of whether the input whole slide image is associated with the biomarker is determined by inputting the data from a plurality of tiles into an aggregation model. The aggregation model may comprise a recurrent neural network, such as a long-short term memory (LSTM) network. The output of the first classifier 40 may be used to select a reduced set of image tiles, for example the top k tiles based on the probabilities output from the first classifier 40, where k is an integer greater than 2. The reduced set of image tiles is taken as input to a classification model. A feature vector is first generated corresponding to each of the image tiles using a first trained model. These feature vectors are then taken as input in sequence to a second trained model, which may comprise an LSTM for example. The output of the LSTM corresponding to the final input in the sequence is inputted to a fully connected neural network layer, which outputs a probability that the input image is associated with the ER biomarker (corresponding to the positive class). This output value is then compared to the first threshold to give the output of the first classification, and the second threshold to give the output of the second classification. The classification prediction for the whole slide image is then determined based on the output of the first classification and the second classification. During training, the image tiles from the training data set are taken as input to the classification model in the same way as during inference. The output is compared to the label for the whole slide image in order to train the first and second models, using a cross entropy loss function and an optimiser function as has been described previously for example. In alternative examples, the classification model may comprise applying a first classification comprising the first trained model and the second trained model with a first threshold, and a second classification comprising a different first trained model and a different second trained model with a second threshold.

### Fourth Example

In the above described examples, improved accuracy is obtained for all classes, with a reduction in the prediction coverage, i.e. the number of instances that the classification model can predict. However, in some applications, the method of classification is used to predict only some of the classes, for example only the negative class or only the positive class. For example, the method of classification can be used to classify whether an image corresponds to the HER2 biomarker, where the model is used only to predict the negative class.

In such examples, the method of classification may use a single classifier and a single predictive threshold. Improved accuracy is obtained for certain classes. For example, a classifier is used only to predict a first class, where improved accuracy is obtained for the first class. A threshold corresponding to the first class is used in the method. If the classification predicts the first class, then a classification prediction of the first class is made. If the classification prediction does not predict the first class, then no classification prediction is made.

As has been described previously, a higher predictive threshold results in a classification method with higher specificity, which will be able to predict more negative cases correctly but will fail to predict more positive cases correctly. For example, the line "Specificity Threshold" in Figure 2(a) shows the threshold at which all true negative cases in the dataset are predicted correctly. The same classifier, combined with a lower predictive threshold, results in a classification method with higher sensitivity, which will be able to predict more positive cases correctly but will fail to predict more negative cases correctly. The line "Sensitivity Threshold" in Figure 2(a) shows the threshold at which all positive cases in the dataset are predicted correctly. The "specificity" threshold is higher than the "sensitivity" threshold.

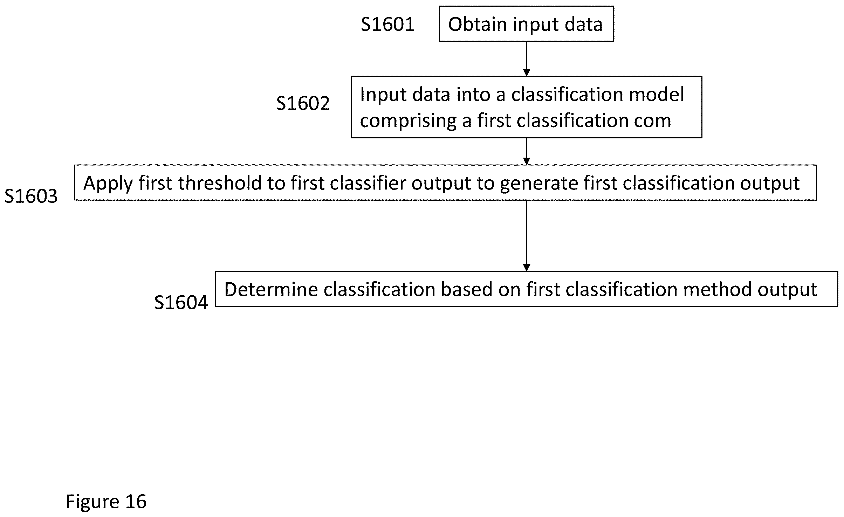

Figure 16 shows a method according to the fourth example. A classification is performed on input image data which corresponds to an image of tissue, as described in relation to the first example. The input image is classified into the negative class if it does not correspond to the HER2 biomarker.

The method according to the fourth example uses a first classification.

In S1601, the input data is obtained in the same manner as described in S201 in relation to the first example.

In S1602, the input data is taken as input to a classification model. The classification model applies a first classifier. The first classifier may be a CNN, as described in relation to S202 in the first example.

In S1603, a threshold is applied to the output of the first classifier. In other words, the probability value output from the first classifier is compared against the threshold. The threshold corresponds to a threshold for the negative class in this example. For example, the threshold may correspond to a sensitivity threshold as determined using a dataset.

In S1604, the final classification prediction for the negative class is determined based on the first classification output from S1603. In this step, if the first classification outputs 0, the classification prediction is 0. If the first classification outputs 1, then no classification prediction is made. Some further step might be performed to determine a final classification. For example, the image may be manually classified by an expert.

In this example, the first classification is used to predict the negative class. In an alternative example, the first classification is used to predict the positive class. In this case, a higher predictive threshold is used, such that the threshold corresponds to a threshold for the positive class. For example, the threshold may correspond to a specificity threshold as determined using a dataset.

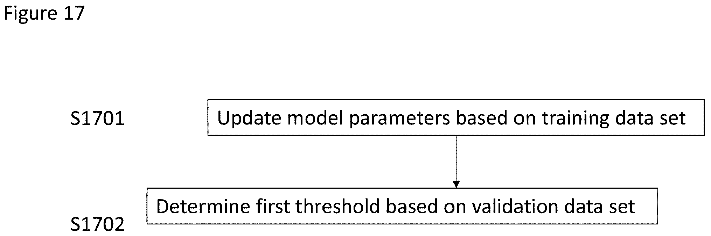

Figure 17 is a schematic illustration of a method of training a system for classification in accordance with the fourth example. The method is used to train a system which can be used in the classification method according to the first example described above.

A training data set and a validation data set, each comprising a plurality of input data, are used in the training method. As described previously, the input data corresponds to the intended type of input data for use during the classification method. The training data set may correspond to a first population and the validation data set may correspond to a target population, as has been described previously. In this example, as has been described in relation to the first example, the input data comprises images of tissue, labelled depending on whether or not it corresponds to the specific biomarker that the model is to detect. As described above, the specific biomarker in this example is the HER2 biomarker. Each image tile is labelled with a 1 if it corresponds to the biomarker and 0 if it does not.

In S1701, the image tiles in the training dataset are submitted to the first classifier, the first CNN 40, which generates a probability of the image being assigned to the positive class. An updated parameter vector $\theta 1'$ is determined so that the difference between the annotations of the images in the training dataset and the outputs of the first classifier for the images is minimised, as described above.

In S1702, given the trained model, the predictive threshold is then determined, using the validation dataset. The image tiles in the validation dataset are submitted to the first classifier, the first CNN 40, which generates a probability of the image being assigned to the positive class, in the same manner as has been described above in relation to the inference (deployment) stage. The classifier model prediction scores, i.e. the probability values output from the classifier model, are then compared to the labels of the images. In this example, from the validation dataset results, the lowest probability value for an image with a label 1 (in the positive class) is taken as the predictive threshold. The predictive threshold is thus set to the sensitivity threshold, as determined from the results of running the first classifier model on the validation dataset. By setting the predictive threshold to the sensitivity threshold, the classification method can generate accurate predictions for the negative class, in other words, the false negative rate, i.e. the proportion of positive cases which the model incorrectly predicts as negative, is reduced.

In the above described example, the predictive threshold is set to the sensitivity threshold as determined from the validation dataset. In some examples however, the predictive threshold is set to a value higher than the sensitivity threshold. For example, the predictive threshold may be determined using an optimisation process. A set of possible values are obtained for the threshold. In this example, all of the values in the set are greater than or equal to the sensitivity threshold of the first classifier and less than or equal to the specificity threshold of the first classifier, as has been described previously in relation to the modification of the first example.

A score is then determined for each possible threshold value. The score may be the FNR, or the NPV for example. The inputs from the test data set are run through the first classifier. The first classifier model outputs are compared against the threshold value to give the classification predictions. The score is then determined for the threshold, for example by determining the FNR for the set of predictions. This is repeated for each possible threshold.

All of the thresholds resulting in a score greater than or equal to the desired score for the application are retrieved, and a threshold from the retrieved thresholds is selected based on coverage. For example, the threshold which classified the most results from the test data set out of the retrieved thresholds is selected, or the highest threshold is selected.

In examples in which the first classification is used to predict the positive class, the predictive threshold may be set to the specificity threshold as determined from the validation data set, in order to reduce the false positive rate. Alternatively, the threshold may be set by an optimisation process, in a similar manner as described above.

In the fourth example, the method of classification uses a single classifier, and may adjust the threshold according to a target population, for example using a validation dataset corresponding to a target population. The example uses one classifier with one threshold, where the method of classification is intended to predict only the negative class or only the positive class for example. In some examples, the classifier is trained on the training set, the performance of the training is validated on the validation set and then the threshold is set on the test set.

Table 2 shows results generated using a first method of classification according to the fourth example, which classifies images from a test dataset as not corresponding the HER2 biomarker. The method uses a classifier model as described above, with a single threshold corresponding to the negative class. Table 2 also shows results generated using a first method of classification according to a comparative example, which classifies images from a test dataset as corresponding the HER2 biomarker. The method uses the same classifier model as described above, with a single threshold of 0.5.

Table 2

|  | Comparative Example | Fourth Example |
|---|---|---|
| **Accuracy** | 0.647482014 | 0.867521368 |
| **F1** | 0.319444444 | 0.114285714 |
| **AUC** | 0.612370114 | 0.558557127 |
| **FPR** | 0.331914894 | 0.009852217 |
| **FNR** | 0.465116279 | 0.935483871 |

(continued)

|  | Comparative Example | Fourth Example |
|---|---|---|
| PPV | 0.227722772 | 0.5 |
| NPV | 0.88700565 | 0.873913043 |
| Sensitivity | 0.534883721 | 0.064516129 |
| Specificity | 0.668085106 | 0.990147783 |
| PLR | 1.611508646 | 6.548387097 |
| NLR | 0.696193157 | 0.944792168 |

By understanding the specific molecular profile of a cancer and/or a patient in general, various procedures conducted against cancer, including hormone therapies, immunotherapies or targeted drugs treatments amongst others, can be informed.

Various medically relevant biomarkers, including any of diagnostics, therapeutics or prognostics markers, including mutation status, receptor status, or copy number variations amongst others, may be identified to determine how well a patient would respond to certain therapies. Mutation status, receptor status, or copy number variations are examples of molecular biomarkers. For example, in some cases the molecular biomarker may be a protein expression level. For example, the specific biomarker may be the Estrogen Receptor (ER), Progesterone Receptor (PR) or Human Epidermal Growth Factor Receptor (HER2). These pillar biomarkers are specific for breast cancer. They are the most important biomarkers for prognosis in breast cancer, and lie on the basis of targeted therapies. ER and HER2 are most commonly associated with cancer treatments Tamoxifen and Herceptin respectively. A patient may be tested for these two biomarkers to determine suitability for these treatments.

In the above described examples, an input image is classified as to whether it is associated with the ER biomarker. Alternatively, the method can be used to determine whether the input image tile is associated with the HER2 biomarker, the PR biomarker, the EGFR biomarker (which is associated with lung adenocarcinoma), or MSI (which is associated with colon adenocarcinoma). Various molecular biomarkers may be used to classify certain cancers into categories, such as breast or colorectal. For instance breast cancer has five different molecular "subtypes", each determined based on the statuses of ER, PR and HER2. For example, if ER, PR and HER2 are all negative, the molecular sub-type is "basal-like". Thus by determining the presence or absence of multiple molecular biomarkers, a molecular sub-type may be predicted. A "molecular subtype" is a way of categorising a particular type of cancer based on the presence or absence or, in some cases, level of one or a set of biomarkers.

The classification method may be used to detect various other biomarkers. For example, the antigen Ki-67 is also increasingly being tested as a marker for cell proliferation indicating cancer aggressiveness. The specific biomarker may thus alternatively be Ki-67. A labelling index based on IHC-staining of the Ki67 nuclear antigen can be used with other IHC markers as an alternative to mitotic counts in grading schemes when assessing tumour proliferation of HER2- and ER+ breast cancer for example. It may provide additional information for therapeutic decisions, such as any requirement for adjuvant chemotherapy. In various studies it was shown to be a powerful predictor of survival. For example, PREDICT is an online tool that shows how different treatments for early invasive breast cancer might improve survival rates after surgery. The PREDICT model performance was improved with the involvement of Ki67 as a prognostic marker. A manual scoring method to interpret IHC-stained Ki67 slides includes counting the invasive cells in a randomly selected region of interest, such as at the periphery of the tumor, and determining the percentage of Ki67 staining with respect to all invasive tumour cells. Similar to conventional molecular profiling techniques described above, this process is labour-intensive, prone to human errors, and open to inter-/intra observer. By predicting the Ki67 index from H&E images for example, such a process may be made shorter and the accuracy potentially improved.

The classification method can provide automatic profiling of a specific biomarker relevant for diagnostics, therapeutics and/or prognostics of cancer. The specific biomarker may be a mutation status, receptor status or copy number variations, amongst other examples. The profiling is performed from whole slide H&E images in the described examples, although other images or inputs may be used.

The biomarker may be a molecule or a characteristic associated with one of one or more molecules, such as an amount of a particular molecule for example. In some cases, the biomarker is a molecule associated with a specific cancer treatment. The biomarker may be a clinically actionable genetic alteration. In this example, the specific biomarker is the ER biomarker. Examples of other biomarkers will be described in more detail below.

Alternatively, the classification prediction may be based on other properties. In some examples, the classification method classifies whether the image contains cancerous cells for example.

Although in the above described examples, an image of a histological section stained with hematoxylin and eosin stain is used, various types of tissue images obtained using various methods may be processed using the described method. For example, alternatively, an image of a histological section which has undergone Immunohistochemistry (IHC) staining may be taken as input. IHC staining involves selectively identifying antigens in cells of a tissue section. Antibodies bind specifically to antigens in biological tissues. The staining allows visualisation of an antibody-antigen interaction. For example, using chromogenic immunohistochemistry (CIH), an antibody is conjugated to an enzyme that can catalyse a colour-producing reaction.

In the above described examples, a binary classification method is performed. However, in alternative examples, the method of classification can be used for a multi-way classification. In a multi-way classification, the classification model applies a first classification and a second classification for each class of the multiple classes, where the second classification is configured to have a higher true positive rate for the class than the first classification. Given the results from a validation dataset, the true positive rate for a class is determined as the proportion of cases in the class which the method predicts correctly as being in the class.

An example in which a classification into three classes is performed will now be described. A three-way classifier model is applied to the input. The first classification for the first class comprises comparing the output for the first class to a first predictive threshold. The second classification for the first class comprises comparing the output for the first class to a second predictive threshold. The first predictive threshold is higher than the second predictive threshold. The first classification for the second class comprises comparing the output for the second class to a third predictive threshold. The second classification for the second class comprises comparing the output for the second class to a fourth predictive threshold. The third predictive threshold is higher than the fourth predictive threshold. The first classification for the third class comprises comparing the output for the third class to a fifth predictive threshold. The second classification for the third class comprises comparing the output for the third class to a sixth predictive threshold. The fifth predictive threshold is higher than the sixth predictive threshold. The first predictive threshold is set as the highest output probability value for the first class from the validation dataset results, for an input which is not in the first class (i.e. is in the second or third class). The second predictive threshold is set as the lowest probability value for the first class from the validation dataset results, for an input in the first class. The first predictive threshold T1 is thus set to a specificity threshold for the first class and the second predictive threshold T2 is set to a sensitivity threshold for the first class, as determined from the results of running the classifier on the validation dataset. The third predictive threshold is set as the highest output probability value for the second class from the validation dataset results, for an input which is not in the second class. The fourth predictive threshold is set as the lowest probability value for the second class from the validation dataset results, for an input in the second class. The fifth predictive threshold is set as the highest output probability value for the third class from the validation dataset results, for an input which is not in the third class. The sixth predictive threshold is set as the lowest probability value for the third class from the validation dataset results, for an input in the third class.

An alternative example in which a classification into three classes is performed will now be described. The first classification for the first class comprises applying a first binary classifier and using a first predictive threshold, and the second classification for the first class comprises applying the first classifier and using a second predictive threshold, wherein the first predictive threshold is higher than the second predictive threshold. The first binary classifier is trained to determine whether the input is in the first class (positive class) or is not in the first class (negative class). The first classification for the second class comprises applying a second binary classifier and using a third predictive threshold, and the second classification for the second class comprises applying the second classifier and using a fourth predictive threshold, wherein the third predictive threshold is higher than the fourth predictive threshold. The second binary classifier determines whether the input is in the second class (positive class) or is not in the second class (negative class). The first classification for the third class comprises applying a third binary classifier and using a fifth predictive threshold, and the second classification for the third class comprises applying the third classifier and using a sixth predictive threshold, wherein the fifth predictive threshold is higher than the sixth predictive threshold. The second binary classifier determines whether the input is in the third class (positive class) or is not in the third class (negative class). Each classifier is trained separately on the training dataset, and the threshold values selected as described in relation to the first example.

An alternative example in which a classification into three classes is performed will now be described. The first classification for the first class comprises applying a first binary classifier and using a first predictive threshold, and the second classification for the first class comprises applying a second binary classifier and using a second predictive threshold. The first binary classifier and second binary classifier are trained to determine whether the input is in the first class (positive class) or is not in the first class (negative class). The first classification for the second class comprises applying a third binary classifier and using a third predictive threshold, and the second classification for the second class comprises applying a fourth binary classifier and using a fourth predictive threshold. The third and fourth binary classifiers are trained to determine whether the input is in the second class (positive class) or is not in the second class (negative class). The first classification for the third class comprises applying a fifth binary classifier and using a fifth predictive threshold, and the second classification for the third class comprises applying a sixth binary classifier and using a sixth predictive threshold. The fifth and sixth binary classifiers are trained to determine whether the input is in the third class (positive class) or is not in the third class (negative class). Three or more classifiers corresponding to each class are trained separately on the training dataset, and the classifiers used for the first and second classification are selected for each class as described in relation to the second example above. For each class, the positive class is the same for the two classifiers.

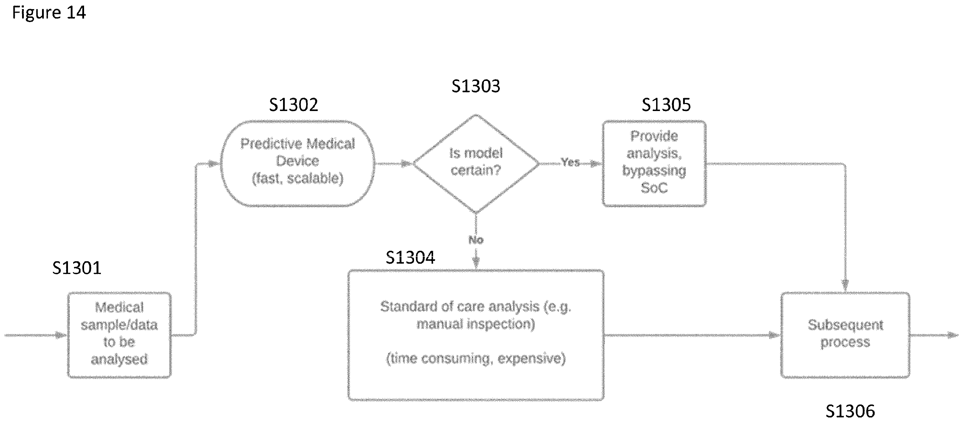

Figure 14 is a schematic illustration of a method of classification. The method comprises deploying a predictive medical device (PMD) which outputs not only a binary predictive value but also an indicator of whether it is certain that the prediction is correct, based on its previous performance on a test dataset. On cases where the PMD is certain, a prediction is given for the case. On cases where the PMD is not certain, a prediction is not given and the case will continue to the standard of care.

In S1301, an input medical sample or data to be analysed is obtained. In S1302, the input is inputted to the PMD. In S1303, the predictive value (1 or 0) is output, together with the certainty. If the first classification and the second classification agree, the certainty is 1, and the method moves to S1305. The analysis (the predictive value) is provided, bypassing the standard of care analysis. If the first classification and the second classification do not agree, the certainty is 0, and the method moves to S1304. Standard of care analysis is then performed, which might include manual inspection. This analysis may be time-consuming or expensive. Once the analysis is provided, in either S1305 or S1034, the method moves to S1306 and performs a subsequent process.

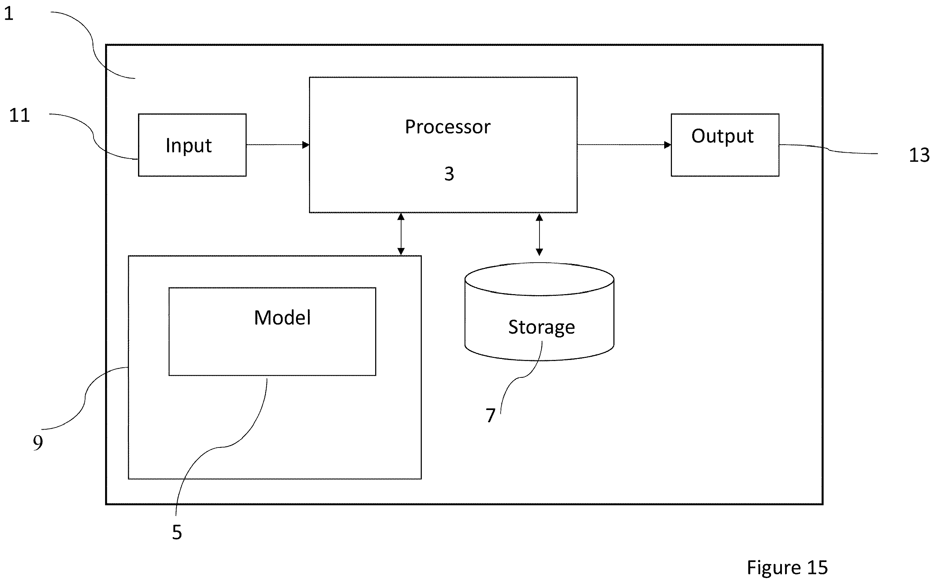

Figure 15 shows a schematic illustration of a classification system 1 in accordance with an embodiment. The system 1 comprises an input 11, a processor 3, working memory 9, an output 13, and storage 7. The system 1 takes input image data and generates an output. The output may comprise diagnostic information. In particular, the output may be an indication of whether the input image is associated with a biomarker.

The system 1 is a computing system, for example an end-user system such as a general purpose computer, or a server.

The processor 3 is coupled to the storage 7 and accesses working memory, including RAM 9. The processor 3 may comprise logic circuitry that responds to and processes the instructions in code stored in the working memory.

A computer program 5 is stored in non-volatile memory 7. The non-volatile memory 7 is accessed by the processor 3 and the stored code 5 is retrieved and executed by the processor 3. In particular, when executed, computer program code 5 embodying the methods described herein is represented as a software product stored in the working memory 9. Execution of the code 5 by the processor 3 will cause embodiments as described herein to be implemented.

The processor 3 also accesses the input module 11 and the output module 13. The input and output modules or interfaces 11, 13 may be a single component or may be divided into a separate input interface 11 and a separate output interface 13.

The input module 11 is connected to an input 15 for receiving data. The input 15 may be a receiver for receiving data from an external storage medium or through a communication network. Alternatively, the input 15 may comprise hardware such as an image capturing apparatus. Alternatively, the input 15 may read data from a stored image file, which may be stored on the system or on a separate storage medium such as a floppy disk, a CD ROM, a magnetic device or a programmable memory device.

Connected to the output module 13 is output 17. The output 17 may comprise hardware, such as a visual display. Alternatively, the output may be a transmitter for transmitting data to an external storage medium or through a communication network. Alternatively, the output 17 may write data in a stored image file, which may be stored on the system or on a separate storage medium such as a floppy disk, a CD ROM, a magnetic device or a programmable memory device.

The storage 7 is communicatively coupled with the processor 3. The storage 7 may contain data that is used by the code 5 when executed by the processor 3. As illustrated, the storage 7 is local memory that is contained in the device. Alternatively however, the storage 7 may be wholly or partly located remotely, for example, using cloud based memory that can be accessed remotely via a communication network (such as the Internet). The code 5 is also stored in the storage 7. The code 5 is placed in working memory 9 when executed.

The system 1 may be located in a common system with hardware for inputting and outputting data. Alternatively, the system 1 may be a remote system 1, which receives image data transmitted from a separate unit (for example an image capturing device), and transmits output data to another separate unit (for example a user computer comprising a screen). For example, the system may be implemented on a cloud computing system, which receives and transmits data.

Although in the described system, a single processor 3 located in a device is used, the system may comprise two or more processors, which may be located in the same system or located remotely, being configured to perform different parts of the processing and transmit data between them. For example, the system may comprise a graphical processing unit (GPU) and a general central processing unit (CPU). Various operations are implemented by the GPU, whereas other operations are implemented by the CPU. For example, matrix operations may be performed by the GPU.

Usual procedures for the loading of software into memory and the storage of data in the storage unit 7 apply. The code 5 can be embedded in original equipment, or can be provided, as a whole or in part, after manufacture. For instance, the code can be introduced, as a whole, as a computer program product, which may be in the form of a download, or can be introduced via a computer program storage medium, such as an optical disk. Alternatively, modifications to existing dialogue manager software can be made by an update, or plug-in, to provide features of the described embodiments.

A method of training a classification model and a method of classification using the trained classification model can be performed on the same system. For example, the method of training a classification model and the method of classification using the trained classification model can be performed on the system as described in relation to Figure 15, where the trained classification model is stored in memory 7 once trained. Alternatively, the method of training a classification model can be performed on a first system, and the trained classification model stored in a second system, so that the method of classification is performed on the second system.

While it will be appreciated that the described embodiments are applicable to any computing system, the example computing system illustrated in Figure 15 provides means capable of putting an embodiment, as described herein, into effect. In use, the system 1 receives data through data input 11. The program 5, executed on processor 3, outputs data through the output 13 in the manner which has been described with reference to the above figures.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made.

**Claims**

1. A computer implemented method, comprising:

    obtaining a first dataset comprising first input data corresponding to a first class;
    obtaining a second dataset comprising second input data corresponding to the first class;
    training at least one classifier using the first dataset;
    inputting the second input data from the second dataset to the at least one classifier, and providing a classification model comprising a first classification and a second classification, wherein the first classification predicts a greater proportion of the second input data corresponding to the first class to be in the first class than the second classification.

2. The method according to claim 1, wherein the first classification comprises applying a first classifier and using a first predictive threshold and the second classification comprises applying the first classifier and using a second predictive threshold, wherein determining the first predictive threshold comprises determining the highest output value of the first classifier for an input from the second data set corresponding to the first class and setting the first predictive threshold to less than or equal to the highest output value, and wherein determining the second predictive threshold comprises determining the lowest output value for an input from the second data set corresponding to a second class and setting the second predictive threshold to greater than or equal to the lowest output value.

3. The method according to claim 1, wherein the at least one classifier comprises at least two classifiers, and wherein providing the classification model comprises determining a first classifier of the at least two classifiers, wherein the first classifier predicts a greatest proportion of the second input data corresponding to the first class to be in the first class of the at least two classifiers, and determining a second classifier of the at least two classifiers, wherein the second classifier predicts a greatest proportion of the second input data corresponding to a second class to be in the second class of the at least two classifiers.

4. The method according to claim 2 or 3, wherein providing the classification model comprises determining a first predictive threshold and a second predictive threshold, wherein determining the first predictive threshold and the second predictive threshold comprises obtaining a plurality of possible combinations of values for the first predictive threshold and values for the second predictive threshold, determining an accuracy of a classification model using each of the possible combinations, and selecting a combination having an accuracy higher than a pre-determined accuracy value.

5. A computer implemented method, comprising:

    obtaining a first dataset comprising first input data corresponding to a first class;
    obtaining a second dataset comprising second input data corresponding to the first class;
    training a classifier using the first dataset;
    inputting the second input data from the second dataset to the at least one classifier, and providing a classification model comprising a first classification, wherein providing the classification model comprising the first classification comprises determining a predictive threshold corresponding to the first class.

6. The method according to any of claims 1 to 5, wherein the first dataset comprises first input data corresponding to a first population and wherein the second data set comprises second input data corresponding to a second population.

7. A computer implemented method, comprising:

   obtaining input data;
   inputting the input data to a classification model, the classification model applying a first classification and a second classification, wherein the first classification is configured to predict a greater proportion of input data corresponding to a first class correctly than the second classification;
   determining a classification prediction for the input data based on the output of the first classification and the second classification.

8. The method according to claim 1 or 7, wherein the first classification comprises applying a first classifier and using a first predictive threshold and the second classification comprises applying the first classifier and using a second predictive threshold, wherein the first predictive threshold is higher than the second predictive threshold.

9. The method according to claim 7, wherein the first classification comprises applying a first classifier and the second classification comprises applying a second classifier.

10. The method according to claim 9, wherein the first classification uses a first predictive threshold and the second classification uses a second predictive threshold, wherein the first predictive threshold is higher than the second predictive threshold.

11. The method according to any of claims 7 to 9, wherein the input data comprises an image of tissue, and wherein determining the classification comprises determining information relating to a medical diagnosis.

12. A computer implemented method of classification, comprising:

   obtaining input data;
   inputting the input data to a classification model, the classification model applying a first classification, wherein the first classification comprises applying a first classifier and using a predictive threshold corresponding to a first class;
   determining a classification prediction for the first class based on the output of the first classification.

13. A classification system, comprising:
   one or more processors, configured to perform the method of any of claims 7 to 12.

14. A classification system comprising a classification model trained according to the method of any of claims 1 to 7.

15. A carrier medium comprising computer readable code configured to cause a computer to perform the method of any of claims 1 to 12.

S101

Obtain input data

S102

Apply a first classification and a second classification

S103

Determine classification prediction based on first classification output and second classification output

Figure 1

Figure 2(a)

S201 Obtain input data

S202 Input data into a classification model comprising a first classifier

S203 Apply first threshold to first classifier output to generate first classification method output, and apply second threshold to first classifier output to generate second classification method output

S204 Determine classification based on first classification method output and second classification method output

Figure 2(b)

WSI

41

First classifier - Convolutional neural network

40

0.764

Apply first and second threshold

42

1

Figure 3

Figure 4

Figure 5

Figure 6

Figure 7

Figure 8(a)

S801  Update model parameters based on training data set

S802  Determine first and second thresholds based on validation data set

Figure 8(b)

Population P1

Population P2
(Target Population)

Model
(untrained) → Training ← Population P1 → Model
(trained on P1) → Calibration → Model
(callibrated on P2)

S801

S802

Negative Threshold

Positive Threshold

Results 1

prediction: negative          prediction: positive

0          Model prediction          1
score

True Negative cases

True Positive cases

Results 2

prediction: negative          prediction: positive

0          Model prediction          1
score

True Negative cases

True Positive cases

EP 4 174 739 A1

Figure 9

Figure 10(a)

S1001 | Update model parameters based on training data set |

S1002 | Determine sensitivity and specificity thresholds based on validation data set |

S1003 | Determine first and second thresholds by optimisation |

Figure 10(b)

S901 | Obtaining a plurality of possible values for the first threshold and the second threshold

S902 | Determine accuracy for a plurality of combinations of possible first and second threshold values

S903 | Retrieve all combinations having an accuracy higher than desired accuracy

S904 | Select combination based on coverage

EP 4 174 739 A1

Figure 10(c)

| T1 / T2 | 0.425 | 0.450 | 0.475 | 0.500 | 0.525 | 0.550 | 0.575 | 0.600 | 0.625 | 0.650 |
|---|---|---|---|---|---|---|---|---|---|---|
| 0.400 | 0.34 | 0.34 | 0.38 | 0.61 | 0.72 | 0.85 | 0.91 | 0.96 | 0.98 | 0.99 |
| 0.425 | | 0.31 | 0.37 | 0.58 | 0.74 | 0.83 | 0.89 | 0.94 | 0.96 | 0.97 |
| 0.450 | | | 0.33 | 0.53 | 0.72 | 0.81 | 0.87 | 0.87 | 0.95 | 0.95 |
| 0.475 | | | | 0.47 | 0.69 | 0.75 | 0.80 | 0.83 | 0.92 | 0.93 |
| 0.500 | | | | | 0.60 | 0.65 | 0.75 | 0.82 | 0.82 | 0.84 |
| 0.525 | | | | | | 0.42 | 0.61 | 0.63 | 0.63 | 0.66 |
| 0.550 | | | | | | | 0.35 | 0.37 | 0.39 | 0.41 |
| 0.575 | | | | | | | | 0.37 | 0.40 | 0.40 |
| 0.600 | | | | | | | | | 0.37 | 0.38 |
| 0.625 | | | | | | | | | | 0.32 |

Figure 11(a)

| Obtain input data | S1101 |

Input data into a classification model
comprising a first classifier and a second classifier    S1102

S1103    Apply threshold to first classifier output to generate first classification method output,
and apply threshold to second classifier output to generate second classification method output

S1104    Determine classification based on first classification method output
and second classification method output

Figure 11(b)

WSI

EP 4 174 739 A1

41

First classifier -

Convolutional neural network

40a

0.764

Second classifier -

Convolutional neural network

40a

0.63

Apply threshold(s) to each output

1

Figure 12(a)

EP 4 174 739 A1

| S1201 | Update parameters for two or more classifier models based on training data sets |

| S1202 | Determine first and second classifiers based on validation data set |

Figure 12(b)

Figure 12(c)

S1401 | Update parameters for two or more classifier models based on training data sets

S1402 | Determine first and second classifiers based on validation data set

S1403 | Determine first and second thresholds by optimisation

Figure 13

I

S1501

40

Convolutional neural network

Aggregation

Top-ranked tile, representing the whole slide.

S1502

S1503 — Apply first threshold to first classifier output to generate first classification method output, and apply second threshold to first classifier output to generate second classification method output

S1504 — Determine classification based on first classification method output and second classification method output

Figure 14

Figure 15

EP 4 174 739 A1

EP 4 174 739 A1

S1601 | Obtain input data

S1602 | Input data into a classification model comprising a first classification com

S1603 | Apply first threshold to first classifier output to generate first classification output

S1604 | Determine classification based on first classification method output

Figure 16

Figure 17

EP 4 174 739 A1

S1701 | Update model parameters based on training data set

Determine first threshold based on validation data set
S1702

Europäisches
Patentamt

European
Patent Office

Office européen
des brevets

# EUROPEAN SEARCH REPORT

**Application Number**

EP 21 20 5556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/247107 A1 (MURTHY VENKATESH N [US] ET AL) 30 August 2018 (2018-08-30)<br>* abstract *<br>* paragraph [0002] – paragraph [0007] *<br>* paragraph [0018] – paragraph [0063]; figures 1-9 *<br>----- | 1-15 | INV.<br>G06N20/20<br>G06N3/04<br>G06N3/08 |
| X | US 2011/251989 A1 (KRAAIJ WESSEL [NL] ET AL) 13 October 2011 (2011-10-13)<br>* abstract *<br>* paragraph [0001] – paragraph [0013] *<br>* paragraph [0018] – paragraph [0082]; figures 1-3 *<br>----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 5 April 2022 | Hasnas, Sergiu |

EPO FORM 1503 03.82 (P04C01)

## ANNEX TO THE EUROPEAN SEARCH REPORT
## ON EUROPEAN PATENT APPLICATION NO.

**EP 21 20 5556**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-04-2022**

| Patent document cited in search report | | Publication date | Patent family member(s) | | Publication date |
|---|---|---|---|---|---|
| US 2018247107 | A1 | 30-08-2018 | US 2018247107 A1 | | 30-08-2018 |
| | | | WO 2017055412 A1 | | 06-04-2017 |
| US 2011251989 | A1 | 13-10-2011 | EP 2182451 A1 | | 05-05-2010 |
| | | | EP 2356588 A1 | | 17-08-2011 |
| | | | US 2011251989 A1 | | 13-10-2011 |
| | | | WO 2010050811 A1 | | 06-05-2010 |

EPO FORM P0459

For more details about this annex : see Official Journal of the European Patent Office, No. 12/82